# EUROPEAN PATENT APPLICATION

(11) **EP 3 835 367 A1**
(43) Date of publication of application: **16.06.2021**
(21) Application number: 19848556.7
(22) Date of filing: 08.08.2019
(51) Int. Cl.: C08L 101/00, C08K 3/32, C08K 5/13, C08L 23/00, C09K 21/10, C09K 21/12

(54) **ADDITIVE COMPOSITION, FLAME-RETARDANT SYNTHETIC RESIN COMPOSITION CONTAINING SAME, AND MOLDED ARTICLE THEREOF**

(30) Priority: 10.08.2018 JP 2018152059
(71) Applicant: ADEKA CORPORATION, Arakawa-ku Tokyo 116-8554 (JP)
(72) Inventor: TANJI, Naoko, Tokyo 116-8554 (JP); YONEZAWA, Yutaka, Tokyo 116-8554 (JP); SAKURAI, Hisashi, Tokyo 116-8554 (JP); MITSUHASHI, Ayaka, Tokyo 116-8554 (JP); KUWABARA, Marisa, Tokyo 116-8554 (JP); BANNO, Keisuke, Tokyo 116-8554 (JP)
(74) Representative: Gill Jennings & Every LLP
(86) International application number: PCT/JP2019/031493
(87) International publication number: WO 2020/032210

(57) **Abstract**

Provided are: an additive composition which can impart excellent heat resistance and flame retardancy to a synthetic resin; a flame-retardant synthetic resin composition containing the same; and a molded article thereof. The additive composition contains: as a component (A), at least one ammonium polyphosphate; and as a component (B), at least one selected from the group consisting of compounds represented by Formula (1) and compounds represented by Formula (2). In Formula (1), R¹, R² and R³ each independently represent a divalent hydrocarbon group having 1 to 3 carbon atoms, and, in Formula (2), R⁴, R⁵ and R⁶ each independently represent a divalent hydrocarbon group having 1 to 3 carbon atoms, and R⁷, R⁸ and R⁹ each independently represent a hydrogen atom or a monovalent hydrocarbon group having 1 to 4 carbon atoms.

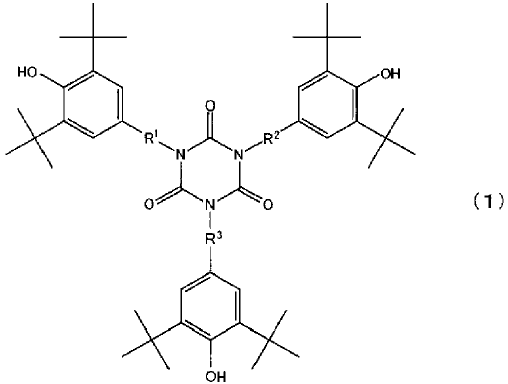

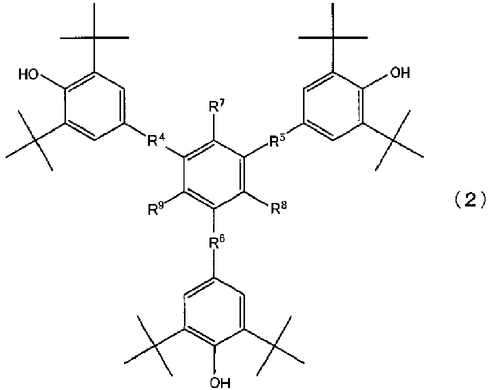

## Description

### TECHNICAL FIELD

The present invention relates to an additive composition, a flame-retardant synthetic resin composition containing the same (hereinafter, also simply referred to as "synthetic resin composition"), and a molded article thereof. More particularly, the present invention relates to: an additive composition which can impart excellent heat resistance and flame retardancy to a synthetic resin; a flame-retardant synthetic resin composition containing the same; and a molded article thereof.

### BACKGROUND ART

Synthetic resins are widely utilized in a variety of molded articles, such as films, sheets and structural components, because they are not only excellent in moldability, heat resistance, mechanical properties and the like, but also have advantages such as low specific gravity and lightweight. Further, many attempts have been made to impart new physical properties, such as impact resistance and elasticity, to synthetic resins by blending them with other polymers.

However, many highly flammable synthetic resins such as polyolefin-based resins are used in a wide range of fields and, therefore, it is indispensable to incorporate a flame retardant for imparting flame retardancy to these resins. As such flame retardants, for example, Patent Documents 1 and 2 propose intumescent flame retardants which contain an ammonium polyphosphate and a nitrogen-containing compounds as main components, and exert flame retardancy by forming a surface intumescent layer on combustion and thereby inhibiting diffusion of a decomposition product and heat transfer.

### RELATED ART DOCUMENTS

### PATENT DOCUMENTS

[Patent Document 1] JPH11-236472A
[Patent Document 2] JP2005-027574A

### SUMMARY OF THE INVENTION

### PROBLEMS TO BE SOLVED BY THE INVENTION

Today, a particularly high performance is demanded especially in those applications where high heat resistance and high flame retardancy are required, such as home electric appliances and automobile battery peripherals. In order to satisfy both heat resistance and flame retardancy in a synthetic resin, it is necessary to use an intumescent flame retardant and an antioxidant in combination. However, depending on the type of antioxidant to be used, the heat resistance may be insufficient or a large amount may have to be added; therefore, there is a demand for an additive composition that has superior heat resistance and flame retardancy as compared to before.

In view of the above, an object of the present invention is to provide: an additive composition which can impart excellent heat resistance and flame retardancy to a synthetic resin; a flame-retardant synthetic resin composition containing the same; and a molded article thereof.

### MEANS FOR SOLVING THE PROBLEMS

The present inventors intensively studied to solve the above-described problems and consequently discovered that the problems can be solved by using an ammonium polyphosphate and a compound having a specific structure, thereby completing the present invention.

That is, an additive composition of the present invention is characterized by containing: as a component (A), at least one ammonium polyphosphate; and, as a component (B), at least one selected from the group consisting of compounds represented by the following Formula (1) and compounds represented by the following Formula (2):

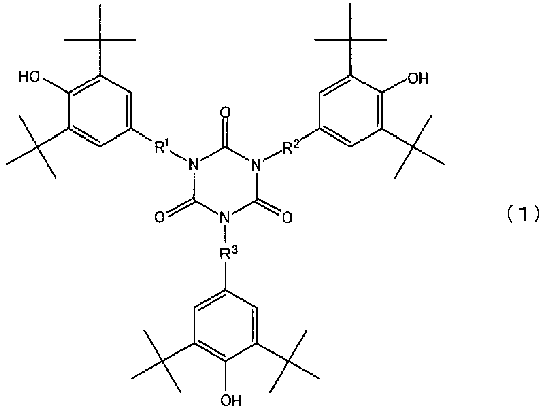

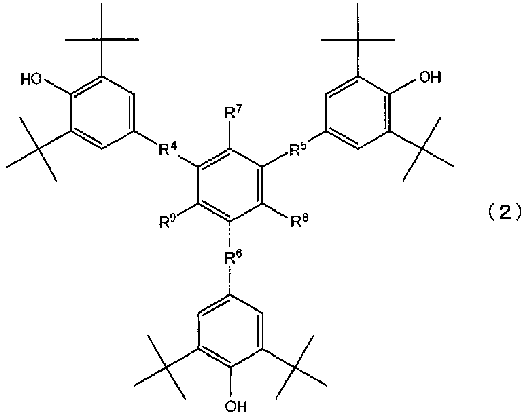

In Formula (1), R¹, R² and R³ each independently represent a divalent hydrocarbon group having 1 to 3 carbon atoms. In Formula (2), R⁴, R⁵ and R⁶ each independently represent a divalent hydrocarbon group having 1 to 3 carbon atoms; and R⁷, R⁸ and R⁹ each independently represent a hydrogen atom or a monovalent hydrocarbon group having 1 to 4 carbon atoms.

The additive composition of the present invention preferably further contains, as a component (C), at least one nitrogen-containing organic compound other than the compounds represented by Formula (1), and the nitrogen-containing organic compound of the component (C) is preferably at least one triazine derivative.

A flame-retardant synthetic resin composition of the present invention is characterized in that it is obtained by incorporating the additive composition of the present invention into a synthetic resin.

In the flame-retardant synthetic resin composition of the present invention, the synthetic resin is preferably a polyolefin-based resin.

A molded article of the present invention is characterized by being obtained from the flame-retardant synthetic resin composition of the present invention.

### EFFECTS OF THE INVENTION

According to the present invention, an additive composition which can impart excellent heat resistance and flame retardancy to a synthetic resin, a flame-retardant synthetic resin composition containing the same, and a molded article thereof can be provided.

### MODE FOR CARRYING OUT THE INVENTION

The additive composition of the present invention will now be described. The additive composition of the present invention contains: as a component (A), at least one ammonium polyphosphate; and, as a component (B), at least one selected from the group consisting of compounds represented by the following Formula (1) and compounds represented by the following Formula (2):

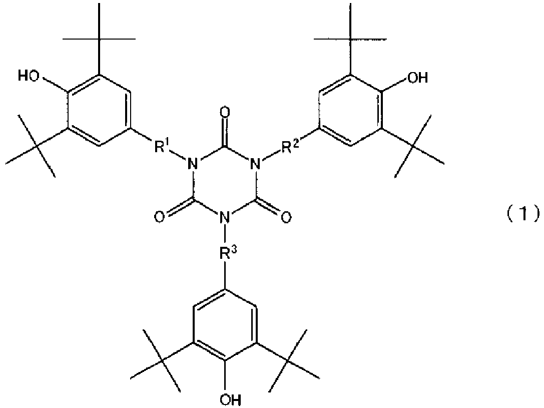

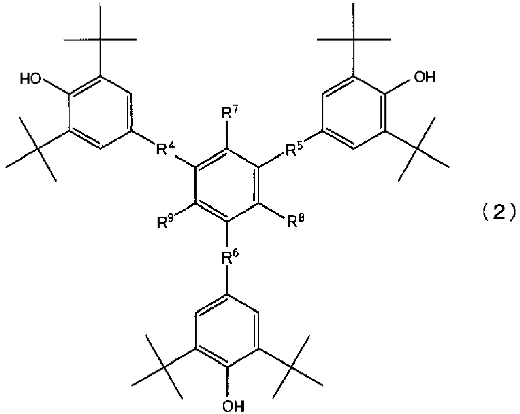

First, the component (A) will be described.

The component (A) according to the additive composition of the present invention is at least one ammonium polyphosphate. This ammonium polyphosphate functions as a component that imparts flame retardancy to a synthetic resin.

The component (A) according to the present invention is at least one ammonium polyphosphate. In the additive composition of the present invention, the "ammonium polyphosphate" encompasses all of ammonium orthophosphate, ammonium pyrophosphate, ammonium metaphosphate, and ammonium polyphosphate. The component (A) may be any one of, or a mixture of two or more of these ammonium polyphosphates. In ammonium polyphosphate, the condensation degree of polyphosphoric acid is, for example, 3 to 1,000. Further, the ammonium polyphosphates may each be a normal salt, an acidic salt, or a basic salt.

An ammonium polyphosphate can be easily obtained by, for example, the following method. As raw materials, for example, a phosphorus-containing compound such as phosphoric acid, polyphosphoric acid, urea phosphate, melamine phosphate, monoammonium phosphate, diammonium phosphate or triammonium phosphate, a condensation agent such as urea or phosphorus pentoxide, and an ammonifying agent such as ammonia gas, ammonium carbonate, ammonium bicarbonate or biuret are allowed to react at a temperature of 170 to 350°C for a sufficient period, whereby an ammonium polyphosphate can be obtained.

As the ammonium polyphosphate, a commercially available product can be used, and examples thereof include EXOLIT 422 (trade name, manufactured by Hoechst AG), EXOLIT 700 (trade name, manufactured by Hoechst AG), PHOS-CheK P/30 (trade name, manufactured by Monsanto Ltd.), PHOS-CheK P/40 (trade name, manufactured by Monsanto Ltd.), SUMISAFE-P (trade name, manufactured by Sumitomo Chemical Co., Ltd.), TERRAJU (registered trademark, manufactured by Chisso Corporation) S10, and TERRAJU (registered trademark, manufactured by Chisso Corporation) S20.

Further, since an ammonium polyphosphate itself is readily hydrolyzed, for example, an ammonium polyphosphate coated with or microencapsulated in a thermosetting resin, and an ammonium polyphosphate in the form of particles coated with a melamine monomer, other nitrogen-containing organic compound or the like can be preferably used. Moreover, for example, an ammonium polyphosphate treated with a surfactant, a silane coupling agent or a silicon compound such as a silicone oil, and an ammonium polyphosphate insolubilized in the production process thereof with an addition of melamine or the like can be used as well.

An ammonium polyphosphate microencapsulated in a thermosetting resin can be obtained by, for example, encapsulating an ammonium polyphosphate with one or a combination of coating resins, such as an epoxy resin, a urethane resin, an acrylic resin, a phenol resin, an alkyd resin, a urea resin, a melamine resin and/or a silicone resin, by a known method such as an interfacial polymerization method, an *in-situ* polymerization method, an in-liquid curing method, a phase separation method, an in-liquid drying method, a melt dispersion cooling method, a spray drying method, or a powder bed method.

Examples of a method of obtaining an ammonium polyphosphate coated with a melamine monomer include: a sublimation coating method in which a prescribed amount of melamine monomer is added to an ammonium polyphosphate that has been heated in advance to 250°C to 300°C in an apparatus capable of performing heating and stirring, and the resulting mixture is further continuously heated at the same temperature to add and/or adhere the thus sublimated melamine to the ammonium polyphosphate; and a hybridization method in which a film of a mixture of an ammonium polyphosphate and a melamine monomer is formed in a high-power stirrer. Further, examples of a method of obtaining an ammonium polyphosphate coated with a silicone resin include a method in which, as disclosed in JPH03-131508A, an ammonium polyphosphate is suspended in an organic solvent, stirred with a curable silicone resin, a curing accelerator and water, and the silicone resin is cured to coat the ammonium polyphosphate.

Examples of commercially available products of an ammonium polyphosphate compound in which hydrolysis of ammonium polyphosphate is reduced in the above-described manner include EXOLIT 462 (trade name, manufactured by Hoechst AG), SUMISAFE-PM (trade name, manufactured by Sumitomo Chemical Co., Ltd.), TERRAJU (registered trademark, manufactured by Chisso Corporation) C60, TERRAJU (registered trademark, manufactured by Chisso Corporation) C70, TERRAJU (registered trademark, manufactured by Chisso Corporation) C80, TERRAJU (registered trademark, manufactured by Chisso Corporation) M30, and TERRAJU (registered trademark, manufactured by Chisso Corporation) M40, and these commercially available products can be preferably used as well.

Next, the component (B) will be described.

The component (B) according to the additive composition of the present invention is at least one selected from the group consisting of compounds represented by Formula (1) below and compounds represented by Formula (2) below. The compounds represented by Formula (1) and the compounds represented by Formula (2) each function as a component that imparts heat resistance to a synthetic resin.

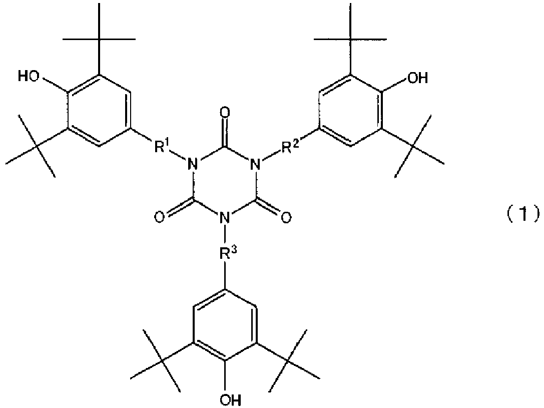

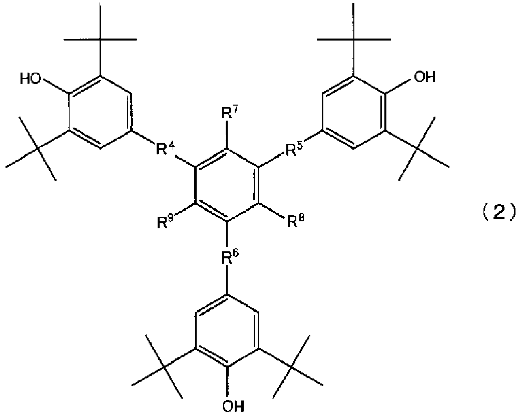

In Formula (1), R¹, R² and R³ each independently represent a divalent hydrocarbon group having 1 to 3 carbon atoms. In Formula (2), R⁴, R⁵ and R⁶ each independently represent a divalent hydrocarbon group having 1 to 3 carbon atoms; and R⁷, R⁸ and R⁹ each independently represent a hydrogen atom or a monovalent hydrocarbon group having 1 to 4 carbon atoms.

Examples of the divalent hydrocarbon group having 1 to 3 carbon atoms which is represented by R¹, R² and R³ in Formula (1) include linear or branched alkylene groups, linear or branched alkenylene groups, and alkynylene groups.

Examples of the linear alkylene groups include -(CH₂)ₙ- (n represents an integer of 1 to 3); examples of the branched alkylene groups include -CH(CH₃)-, -CH₂(CH₂CH₃)-, -CH(CH₃)CH₂-, and -CH₂CH(CH₃)-; examples of the linear alkenylene groups include -CH=CH-, -CH=CH-CH₂-, and -CH₂-CH=CH-; examples of the branched alkenylene groups include -C(CH₃)=CH- and -CH=C(CH₃)-; and examples of the alkynylene groups include -C≡C-, -CH₂-C≡C-, and -C≡C-CH₂-.

Examples of the compounds represented by Formula (1) include 1,3,5-tris(3,5-di-*tert*-butyl-4-hydroxybenzyl)isocyanurate, 1,3,5-tris(3,5-di-*tert*-butyl-4-hydroxyphenylethyl)isocyanurate and 1,3,5-tris(3,5-di-*tert*-butyl-4-hydroxyphenylpropyl)isocyanurate, and these compounds may be used individually, or in combination of two or more thereof. Thereamong, 1,3,5-tris(3,5-di-*tert*-butyl-4-hydroxybenzyl)isocyanurate is preferred.

Examples of the divalent hydrocarbon group having 1 to 3 carbon atoms which is represented by R⁴, R⁵ and R⁶ in Formula (2) include the same groups as those exemplified above for the divalent hydrocarbon group having 1 to 3 carbon atoms which is represented by R¹, R² and R³.

The monovalent hydrocarbon group having 1 to 4 carbon atoms which is represented by R⁷, R⁸ and R⁹ may be, for example, a linear or branched alkyl group, a linear or branched alkenyl group, or a linear or branched alkynyl group. Examples of the linear alkyl group include CH₃-, CH₃CH₂-, CH₃CH₂CH₂-, and CH₃CH₂CH₂CH₂-; examples of the branched alkyl group include CH₃(CH₃)CH-, CH₃(CH₃)CH₂CH₂-, CH₃CH₂(CH₃)CH-, and (CH₃)₃C-; examples of the linear alkenyl group include CH₂=CH-, CH₂=CHCH₂-, CH₃CH=CH-, CH₂=CHCH₂CH₂-, CH₃CH=CHCH₂-, and CH₃CH₂CH=CH-; examples of the branched alkenyl group include CH(CH₃)=CH-, CH₂=C(CH₃)-, CH₂=C(CH₃)CH₂-, and CH₃C(CH₃)=CH₂-; and examples of the alkynyl group include CH≡C-, CH≡CCH₂-, CH₃C≡C-, CH≡CCH₂CH₂-, CH₂C≡CCH₂-, and CH₂CH₂C≡C-. Among these groups, the hydrocarbon group having 1 to 4 carbon atoms is preferably a linear or branched alkyl group.

Examples of the compounds represented by Formula (2) include 1,3,5-tris(3,5-di-*tert*-butyl-4-hydroxybenzyl)-2,4,6-trimethylbenzene, 1,3,5-tris(3,5-di-*tert*-butyl-4-hydroxyphenylethyl)-2,4,6-trimethylbenzene, 1,3,5-tris(3,5-di-*tert*-butyl-4-hydroxyphenylpropyl)-2,4,6-trimethylbenzene, 1,3,5-tris(3,5-di-*tert*-butyl-4-hydroxybenzyl)-2,4,6-triethylbenzene, 1,3,5-tris(3,5-di-*tert*-butyl-4-hydroxybenzyl)-2,4,6-tripropylbenzene, 1,3,5-tris(3,5-di-*tert*-butyl-4-hydroxybenzyl)-2,4,6-tributylbenzene and 1,3,5-tris(3,5-di-*tert*-butyl-4-hydroxybenzyl)benzene, and these compounds may be used individually, or in combination of two or more thereof. Thereamong, 1,3,5-tris(3,5-di-*tert*-butyl-4-hydroxybenzyl)-2,4,6-trimethylbenzene is preferred.

The compounds represented by Formula (1) and the compounds represented by Formula (2) may be used individually, or two or more thereof may be used in combination. When these compounds are mixed, the ratio thereof may be any value.

In the additive composition of the present invention, from the standpoints of heat resistance and flame retardancy, the content ratio (A)/(B) of the component (A) and the component (B) is preferably 99.95/0.05 to 75/25, more preferably 99.8/0.2 to 85/15, still more preferably 99.7/0.3 to 92/8, in terms of mass ratio.

The additive composition of the present invention can be obtained by mixing the component (A) and the component (B) and, when the additive composition is incorporated into a synthetic resin, these components may be mixed in advance and then blended with the synthetic resin, or the components may each be incorporated into the synthetic resin at the time of blending the additive composition with the synthetic resin. Further, the components may be made into a masterbatch before being incorporated.

A variety of mixing machines can be used for mixing the component (A) and the component (B) or mixing these components with the below-described component (C) and other optional component(s). Examples of the mixing machines that can be used include a tumbler mixer, a Henschel mixer, a ribbon blender, a V-type mixer, a W-type mixer, a super mixer, and a Nauta mixer.

From the standpoints of heat resistance and flame retardancy, it is preferred that the additive composition of the present invention further contains, as a component (C), at least one nitrogen-containing organic compound other than the compounds represented by Formula (1).

The component (C) will now be described.

The component (C) according to the additive composition of the present invention is at least one nitrogen-containing organic compound other than the compounds represented by Formula (1). The nitrogen-containing organic compound of the component (C) functions as a component that imparts flame retardancy to a synthetic resin together with the ammonium polyphosphate of the component (A). The "nitrogen-containing organic compound" of the component (C) means a compound that not only generates a non-flammable gas when heated by combustion or ignition, or contact with a flame or the like, but also produces a carbonaceous residue or facilitates the production. Specific examples of the nitrogen-containing organic compound include the following (1) to (4).
(1) triazine derivatives: melamine; melamine cyanurate; ammeline; phthalodiguanamine; butylene diguanamine; norbornene diguanamine; methylene diguanamine; ethylene dimelamine; trimethylene dimelamine; tetramethylene dimelamine; hexamethylene dimelamine; 1,3-hexylene dimelamine; methylolmelamine; a methylolmelamine having 1 to 6 methylol groups, which is obtained by a reaction between melamine and formaldehyde at a molar ratio (former:latter) of 1:1 to 1:6; a melamine resin obtained by heat-curing this methylolmelamine in an acidic solution; a modified melamine resin obtained by performing the heat-curing in the resinification of the methylolmelamine with simultaneous addition of urea, a phenol, or an alcohol; melamine phosphate; melamine orthophosphate; melamine pyrophosphate; melamine polyphosphate; melamine metaphosphate; melamine sulfate; a reaction product between a cyanuric acid halide and a linear or branched alkylenediamine having 2 to 6 carbon atoms, particularly a reaction product between cyanuric acid chloride and a linear or branched alkylenediamine having 2 to 6 carbon atoms, such as ethylenediamine, propylenediamine, 1,4-tetramethylenediamine, 1,5-pentamethylenediamine or 1,6-hexamethylenediamine, at a molar ratio (former:latter) of 1:1 to 1:3; benzoguanamine, a methylolated benzoguanamine obtained by a reaction between benzoguanamine and formaldehyde at a molar ratio (former:latter) of 1:1 to 1:4, and a resinous material obtained by heat-curing this methylolated benzoguanamine in an acidic solution; acetoguanamine; acetoguanamine, a methylolated acetoguanamine obtained by a reaction between acetoguanamine and formaldehyde at a molar ratio (former:latter) of 1:1 to 1:4, and a resinous material obtained by heat-curing this methylolated acetoguanamine in an acidic solution; 3,9-bis[2-(3,5-diamino-2,4,6-triazaphenyl)ethyl]-2,4,8,10-tetraoxaspiro[5.5]undecane, a methylolated spiro compound obtained by a reaction between this spiro compound and formaldehyde at a molar ratio (former:latter) of 1:1 to 1:10, and a resinous material obtained by heat-curing this methylolated spiro compound in an acidic solution; and a homopolymer and/or a copolymer, which contains a triazine derivative represented by Formula (3) below as a repeating unit. Examples of a group represented by X¹ in Formula (3) include a monomethylamino group, a dimethylamino group, a methylethylamino group, a methylethylamino group, a monoethylamino group, a diethylamino group, a monopropylamino group, a dipropylamino group, a methylpropylamino group, an ethylpropylamino group, a diisopropylamino group, a mono-*n*-butylamino group, a di-*n*-propylamino group, a methyl-*n*-butylamino group, an ethyl-*n*-butylamino group, a propyl-*n*-butylamino group, an isopropyl-*n*-butylamino group, a monoisobutylamino group, a diisobutylamino group, a methylisobutylamino group, an ethylisobutylamino group, a propylisobutylamino group, an isopropylisobutylamino group, a monopentylamino group, a dipentylamino group, a methylpentylamino group, an ethylpentylamino group, a propylpentylamino group, an isopropylpentylamino group, an n-butylpentylamino group, an isobutylpentylamino group, a monohexylamino group, a dihexylamino group, a methylhexylamino group, an ethylhexylamino group, a propylhexylamino group, an isopropylhexylamino group, an *n*-butylhexylamino group, an isobutylhexylamino group, a pentylhexylamino group, a monohydroxyethylamino group, a dihydroxyethylamino group, a monohydroxypropylamino group, a dihydroxypropylamino group, a monohydroxyisopropylamino group, a dihydroxypropylamino group, a monohydroxy-n-butylamino group, a dihydroxy-n-butylamino group, a monohydroxyisobutylamino group, a dihydroxyisobutylamino group, a monohydroxypentylamino group, a dihydroxypentylamino group, a monohydroxyhexylamino group, a dihydroxyhexylamino group, a *N*-methylhydroxyethylamino group, a morpholino group, and a piperidino group. Further, examples of a group represented by Y in Formula
(3) include an ethylenediamine residue, a *N,N'*-dimethylethylenediamine residue, a *N,N'*-diethylethylenediamine residue, a 1,3-diaminopropane residue, a tetramethylenediamine residue, a pentamethylenediamine residue, a hexamethylenediamine residue, a piperazine residue, and a *trans*-2,5-dimethylpiperazine residue.

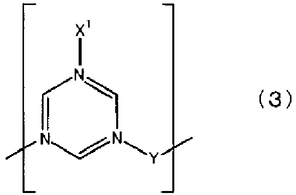

In Formula (3), X¹ and Y each represent a group bound to a triazine ring via a nitrogen atom; X¹ is an alkylamino group represented by -NHR¹⁰ or -NR¹¹R¹², a morpholino group, or a piperidino group, and R¹⁰, R¹¹ and R¹² are each a hydrogen atom or a linear or branched alkyl group having 1 to 6 carbon atoms, where R¹¹ and R¹² are optionally the same group or different groups, or X¹ is a hydroxyalkylamino group represented by -NHR¹³ or -NR¹⁴R¹⁵, and R¹³, R¹⁴ and R¹⁵ are each a linear or branched hydroxyalkyl group having 2 to 6 carbon atoms, where R¹⁴ and R¹⁵ are optionally the same group or different groups; and Y is a divalent group of piperazine, a divalent group represented by -HN(CH₂)ₘNH- wherein, m represents a number of 2 to 6, or a group represented by -NR¹⁶(CH₂)ₚR¹⁷N-, and R¹⁶ and R¹⁷ are each a linear or branched alkyl or hydroxyalkyl group having 1 to 6 carbon atoms.

Specific examples of the triazine derivatives also include poly-[2,4-(piperazine-1,4-yl)-6-(morpholino-4-yl)-1,3,5-triazine] (CAS No. 93058-67-4, CAS No. 1078142-02-5).
(2) (iso)cyanuric acid derivatives: melamine cyanurate obtained by a neutralization reaction between cyanuric acid and melamine; derivatives having an unsaturated double bond, such as triallyl cyanurate, triallyl isocyanurate, and trimetaallyl isocyanurate; resinous materials obtained by cross-linking these derivatives having an unsaturated double bond; trisepoxypropyl isocyanurate; and tris-(2-hydroxyethyl) isocyanurate.
(3) imidazolidinone derivatives: resinous materials obtained by heat condensation of a methylolated product, which is obtained by a reaction between ethylene urea or ethylene thiourea and formaldehyde at a molar ratio (former: latter) of 1:1 to 1:2, in an acidic solution.
(4) piperazine derivatives: piperazine, piperazine phosphate, piperazine orthophosphate, piperazine pyrophosphate, piperazine polyphosphate, and piperazine metaphosphate.

In the additive composition of the present invention, a commercially available product may be used as the nitrogen-containing organic compound of the component (C).

Among nitrogen-containing organic compounds for the component (C), from the standpoints of heat resistance and flame retardancy, triazine derivatives are preferred, melamine cyanurate and poly-[2,4-(piperazine-1,4-yl)-6-(morpholino-4-yl)-1,3,5-triazine] (CAS No. 93058-67-4, CAS No. 1078142-02-5) are more preferred, and poly-[2,4-(piperazine-1,4-yl)-6-(morpholino-4-yl)-1,3,5-triazine] (CAS No. 93058-67-4, CAS No. 1078142-02-5) is still more preferred.

In the additive composition of the present invention, the content ratio (A)/(C) of the component (A) and the component (C) is preferably 30/70 to 95/5, more preferably 40/60 to 85/15, still more preferably 50/50 to 80/20, in terms of mass ratio.

The component (C) may be incorporated into the additive composition of the present invention in advance, or may be incorporated into a synthetic resin at the time of blending the additive composition with the synthetic resin.

From the standpoints of heat resistance and flame retardancy, it is preferred that the additive composition of the present invention further contains at least one dialkyl phosphinic acid or salt thereof. From the standpoints of heat resistance and flame retardancy, the dialkyl phosphinic acid or salt thereof is preferably a dialkyl phosphinic acid or salt thereof that is represented by the following Formula (4):

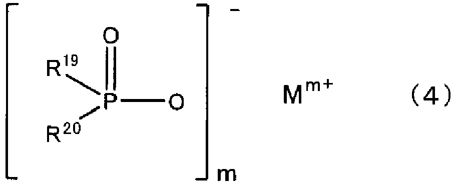

In Formula (4), R¹⁹ are R²⁰, which are optionally the same or different, each represent a linear or branched alkyl group having 1 to 6 carbon atoms; M represents Mg, Ca, Al, Sb, Sn, Ge, Ti, Fe, Zr, Zn, Ce, Bi, Sr, Mn, Li, Na, K, H, and/or a protonated nitrogen base; and m means 1 to 4.

Examples of the alkyl group having 1 to 6 carbon atoms which is represented by R¹⁹ and R²⁰ include methyl, ethyl, *n*-propyl, isopropyl, *n*-butyl, isobutyl, *sec*-butyl, *tert*-butyl, *n*-pentyl, isopentyl, neopentyl, *tert*-amyl, 1,2-dimethylpropyl, *n*-hexyl, 1,3-dimethylbutyl, 1-isopropylpropyl, 1,2-dimethylbutyl, cyclopropyl, cyclobutyl, cyclopentyl, and cyclopropyl.

From the standpoints of heat resistance and flame retardancy, R¹⁹ and R²⁰ are each preferably an alkyl group having 1 to 4 carbon atoms, most preferably an ethyl group. From the standpoints of heat resistance and flame retardancy, M is preferably zinc or aluminum, more preferably aluminum. From the standpoints of heat resistance and flame retardancy, the dialkyl phosphinic acid or salt thereof is preferably the following compound (4-1) or compound (4-2), more preferably the compound (4-1):

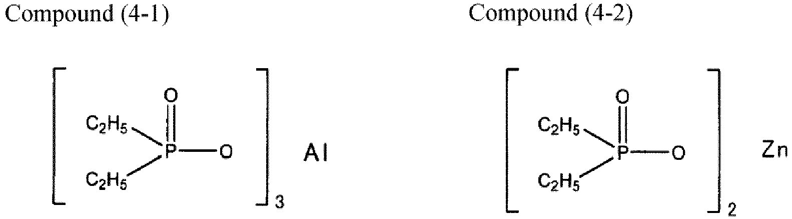

The dialkyl phosphinic acid or salt thereof may be incorporated into the additive composition of the present invention in advance, or may be incorporated into a synthetic resin at the time of blending the additive composition with the synthetic resin.

When incorporated into a synthetic resin, the dialkyl phosphinic acid or salt thereof is used in an amount of preferably 1 to 100 parts by mass, more preferably 5 to 60 parts by mass, still more preferably 10 to 40 parts by mass, with respect to 100 parts by mass of the synthetic resin.

In the additive composition of the present invention, a metal oxide that serves as a flame retardant aid may be incorporated as required within a range that does not impair the effects of the present invention. Examples of the metal oxide include zinc oxide, titanium oxide, magnesium oxide, and silicon oxide, among which zinc oxide is preferred. The metal oxide may be surface-treated as well. As zinc oxide, a commercially available product can be used, and examples thereof include Zinc Oxide Type 1 (manufactured by Mitsui Mining and Smelting Co., Ltd.), partially coated-type zinc oxide (manufactured by Mitsui Mining and Smelting Co., Ltd.), NANOFINE 50 (ultrafine zinc oxide particles having an average particle size of 0.02 µm, manufactured by Sakai Chemical Industry Co., Ltd.), and NANOFINE K (zinc silicate-coated ultrafine zinc oxide particles having an average particle size of 0.02 µm; manufactured by Sakai Chemical Industry Co., Ltd.).

When a metal oxide is incorporated, the content thereof is, from the standpoint of flame retardancy, preferably 0.01 to 10 parts by mass, more preferably 0.5 to 10 parts by mass, still more preferably 1.0 to 7.5 parts by mass, with respect to a total of 100 parts by mass of the component (A) and the component (C) that are contained in the additive composition. When the content of the metal oxide is less than 0.01 parts by mass, the metal oxide does not exert a sufficient effect as a flame retardant aid, while when the content of the metal oxide is greater than 10 parts by mass, the metal oxide may cause deterioration of resin properties. The metal oxide may be incorporated into the additive composition of the present invention in advance, or may be incorporated into a synthetic resin at the time of blending the additive composition with the synthetic resin.

In addition, in the additive composition of the present invention, an anti-drip agent may be incorporated as required within a range that does not impair the effects of the present invention. Examples of the anti-drip agent include fluorine-based anti-drip agents, silicone rubbers, and layered silicates.

Examples of the layered silicates include: smectite-type clay minerals, such as montmorillonite, saponite, hectorite, beidellite, stevensite, and nontronite; vermiculite; halloysite; swellable mica; and talc, and those in which organic cations, quaternary ammonium cations or phosphonium cations are intercalated between layers can also be used.

The anti-drip agent is particularly preferably a fluorine-based anti-drip agent, and specific examples thereof include: fluorocarbon resins, such as polytetrafluoroethylenes, polyvinylidene fluorides, and polyhexafluoropropylenes; and alkali metal perfluoroalkane sulfonates and alkaline earth metal perfluoroalkane sulfonates, such as sodium perfluoromethane sulfonate, potassium perfluoro-*n*-butane sulfonate, potassium perfluoro-*t*-butane sulfonate, sodium perfluorooctane sulfonate, and calcium perfluoro-2-ethylhexane sulfonate. Among these anti-drip agents, a polytetrafluoroethylene is most preferred because of its drip-inhibiting property.

When an anti-drip agent is incorporated, the content thereof is preferably 0.005 to 5 parts by mass, more preferably 0.01 to 5 parts by mass, still more preferably 0.05 to 3 parts by mass, yet still more preferably 0.1 to 1 part by mass, with respect to a total of 100 parts by mass of the component (A) and the component (C) that are contained in the additive composition. When the content of the anti-drip agent is less than 0.005 parts by mass, a sufficient drip-inhibiting effect is not attained, while when the content of the anti-drip agent is greater than 5 parts by mass, the anti-drip agent may cause deterioration of resin properties. The anti-drip agent may be incorporated into the additive composition of the present invention in advance, or may be incorporated into a synthetic resin at the time of blending the additive composition with the synthetic resin.

Further, in the additive composition of the present invention, for the purposes of inhibiting secondary aggregation during blending and improving the water resistance, a silicone oil may be incorporated as required within a range that does not impair the effects of the present invention. Examples of the silicone oil include: dimethyl silicone oils in which the side chains and terminals of polysiloxane are all methyl groups; methylphenyl silicone oils in which some of the side chains of polysiloxane are phenyl groups; methyl hydrogen silicone oils in which some of the side chains of polysiloxane are hydrogen atoms; and copolymers of these silicone oils. In addition, modified silicone oils in which organic groups are introduced to some of the side chains and/or terminals of the above-described silicone oils, for example, amine-modified, epoxy-modified, alicyclic epoxy-modified, carboxyl-modified, carbinol-modified, mercapto-modified, polyether-modified, long-chain alkyl-modified, fluoroalkyl-modified, higher fatty acid ester-modified, higher fatty acid amide-modified, silanol-modified, diol-modified, phenol-modified and/or aralkyl-modified silicone oils, can also be used.

Specific examples of the silicone oil include: dimethyl silicone oils, such as KF-96 (manufactured by Shin-Etsu Chemical Co., Ltd.), KF-965 (manufactured by Shin-Etsu Chemical Co., Ltd.), and KF-968 (manufactured by Shin-Etsu Chemical Co., Ltd.); methyl hydrogen silicone oils or silicone oils having a methyl hydrogen polysiloxane structure, such as KF-99 (manufactured by Shin-Etsu Chemical Co., Ltd.), KF-9901 (manufactured by Shin-Etsu Chemical Co., Ltd.), HMS-151 (manufactured by Gelest Inc.), HMS-071 (manufactured by Gelest Inc.), HMS-301 (manufactured by Gelest Inc.), and DMS-H21 (manufactured by Gelest Inc.); methylphenyl silicone oils, such as KF-50 (manufactured by Shin-Etsu Chemical Co., Ltd.), KF-53 (manufactured by Shin-Etsu Chemical Co., Ltd.), KF-54 (manufactured by Shin-Etsu Chemical Co., Ltd.), and KF-56 (manufactured by Shin-Etsu Chemical Co., Ltd.); epoxy-modified products, such as X-22-343 (manufactured by Shin-Etsu Chemical Co., Ltd.), X-22-2000 (manufactured by Shin-Etsu Chemical Co., Ltd.), KF-101 (manufactured by Shin-Etsu Chemical Co., Ltd.), KF-102 (manufactured by Shin-Etsu Chemical Co., Ltd.), and KF-1001 (manufactured by Shin-Etsu Chemical Co., Ltd.); carboxyl-modified products, such as X-22-3701E (manufactured by Shin-Etsu Chemical Co., Ltd.); carbinol-modified products, such as X-22-4039 (manufactured by Shin-Etsu Chemical Co., Ltd.) and X-22-4015 (manufactured by Shin-Etsu Chemical Co., Ltd.); and amine-modified products, such as KF-393 (manufactured by Shin-Etsu Chemical Co., Ltd.).

When a silicone oil is incorporated, the content thereof is preferably 0.01 to 10 parts by mass, more preferably 0.1 to 5 parts by mass, still more preferably 0.5 to 3 parts by mass, with respect to a total of 100 parts by mass of the component (A) and the component (C) that are contained in the additive composition. When the content of the silicone oil is less than 0.01 parts by mass, the inhibition of secondary aggregation and the improvement of water resistance may be insufficient, while when the content of the silicone oil is greater than 10 parts by mass, the silicone oil may cause deterioration of resin properties. The silicone oil may be incorporated into the additive composition of the present invention in advance, or may be incorporated into a synthetic resin at the time of blending the additive composition with the synthetic resin.

Still further, in the additive composition of the present invention, for the purposes of inhibiting aggregation of additive powder to improve the storage stability and imparting the additive composition with water resistance and heat resistance, a silane coupling agent may be incorporated as required within a range that does not impair the effects of the present invention.

Examples of the silane coupling agent include: alkenyl group-containing silane coupling agents, such as vinyltrimethoxysilane, vinyltriethoxysilane, vinyltriacetoxysilane, vinyltris(2-methoxyethoxy)silane, vinylmethyldimethoxysilane, octenyltrimethoxysilane, allyltrimethoxysilane, and *p*-styryltrimethoxysilane; acryl group-containing silane coupling agents, such as 3-acryloxypropyltrimethoxysilane and 3-acryloxypropyltriethoxysilane; methacryl group-containing silane coupling agents, such as 3-methacryloxypropylmethyldimethoxysilane, 3-methacryloxypropyltrimethoxysilane, 3-methacryloxypropylmethyldiethoxysilane, 3-methacryloxypropyltriethoxysilane, and methacryloxyoctyltrimethoxysilane; epoxy group-containing silane coupling agents, such as 2-(3,4-epoxycyclohexyl)ethyltrimethoxysilane, 3-glycidoxypropylmethyldimethoxysilane, 3-glycidoxypropyltrimethoxysilane, 3-glycidoxypropylmethyldiethoxysilane, 3-glycidoxypropyltriethoxysilane, and glycidoxyoctyltrimethoxysilane; amino group-containing silane coupling agents, such as *N*-2-(aminoethyl)-3-aminopropylmethyldimethoxysilane, *N*-2-(aminoethyl)-3-aminopropyltrimethoxysilane, 3-aminopropyltrimethoxysilane, 3-aminopropyltriethoxysilane, 3-triethoxysilyl-*N*-(1,3-dimethyl-butylidene)propylamine, *N*-phenyl-3-aminopropyltrimethoxysilane, *N,N'*-bis[3-(trimethoxysilyl)propyl]ethylenediamine, and a hydrochloride of *N*-(vinylbenzyl)-2-aminoethyl-3-aminopropyltrimethoxysilane; isocyanurate group-containing silane coupling agents, such as tris(trimethoxysilylpropyl)isocyanurate; mercapto group-containing silane coupling agents, such as 3-mercaptopropylmethyldimethoxysilane, 3-mercaptopropyltrimethoxysilane, and 3-mercaptopropyltriethoxysilane; ureido group-containing silane coupling agents, such as 3-ureidopropyltrimethoxysilane and 3-ureidopropyltriethoxysilane; sulfide group-containing silane coupling agents, such as bis(triethoxysilylpropyl)tetrasulfide; thioester group-containing silane coupling agents, such as 3-octanoylthio-1-propyltriethoxysilane; and isocyanate group-containing silane coupling agents, such as 3-isocyanate propyltriethoxysilane and 3-isocyanate propyltrimethoxysilane.

Among these silane coupling agents, epoxy group-containing silane coupling agents are preferred from the standpoints of inhibiting aggregation of additive powder to improve the storage stability and imparting the additive composition with water resistance and heat resistance.

As the silane coupling agent, a commercially available product can be used, and examples thereof include: vinyltrimethoxysilane, such as KBM-1003 manufactured by Shin-Etsu Chemical Co., Ltd., A-171 manufactured by Momentive Performance Materials Japan LLC, Z-6300 manufactured by Dow Corning Toray Co., Ltd., GENIOSIL XL10 manufactured by Wacker Asahikasei Silicone Co., Ltd., and SILA-ACE S210 manufactured by Nichibi Trading Co., Ltd.; vinyltriethoxysilane, such as KBE-1003 manufactured by Shin-Etsu Chemical Co., Ltd., A-151 manufactured by Momentive Performance Materials Japan LLC, Z-6519 manufactured by Dow Corning Toray Co., Ltd., GENIOSIL GF56 manufactured by Wacker Asahikasei Silicone Co., Ltd., and SILA-ACE S220 manufactured by Nichibi Trading Co., Ltd.; vinyltriacetoxysilane, such as GENIOSIL GF62 manufactured by Wacker Asahikasei Silicone Co., Ltd.; vinyltris(2-methoxyethoxy)silane, such as A-172 manufactured by Momentive Performance Materials Japan LLC; vinylmethyldimethoxysilane, such as A-2171 manufactured by Momentive Performance Materials Japan LLC and GENIOSIL XL12 manufactured by Wacker Asahikasei Silicone Co., Ltd.; octenyltrimethoxysilane, such as KBM-1083 manufactured by Shin-Etsu Chemical Co., Ltd.; allyltrimethoxysilane, such as Z-6825 manufactured by Dow Corning Toray Co., Ltd.; p-styryltrimethoxysilane, such as KBM-1403 manufactured by Shin-Etsu Chemical Co., Ltd.; 3-acryloxypropyltrimethoxysilane, such as KBM-5103; 3-methacryloxypropylmethyldimethoxysilane, such as KBM-502 manufactured by Shin-Etsu Chemical Co., Ltd., and Z-6033 manufactured by Dow Corning Toray Co., Ltd.; 3-methacryloxypropyltrimethoxysilane, such as KBM-503 manufactured by Shin-Etsu Chemical Co., Ltd., A-174 manufactured by Momentive Performance Materials Japan LLC, Z-6030 manufactured by Dow Corning Toray Co., Ltd., GENIOSIL GF31 manufactured by Wacker Asahikasei Silicone Co., Ltd., and SILA-ACE S710 manufactured by Nichibi Trading Co., Ltd.; 3-methacryloxypropylmethyldiethoxysilane, such as KBE-502 manufactured by Shin-Etsu Chemical Co., Ltd.; 3-methacryloxypropyltriethoxysilane, such as KBE-503 manufactured by Shin-Etsu Chemical Co., Ltd., and Y-9936 manufactured by Momentive Performance Materials Japan LLC; methacryloxyoctyltrimethoxysilane, such as KBM-5803 manufactured by Shin-Etsu Chemical Co., Ltd.; 2-(3,4-epoxycyclohexyl)ethyltrimethoxysilane, such as KBM-303 manufactured by Shin-Etsu Chemical Co., Ltd., A-186 manufactured by Momentive Performance Materials Japan LLC, Z-6043 manufactured by Dow Corning Toray Co., Ltd., and SILA-ACE S530 manufactured by Nichibi Trading Co., Ltd.; 3-glycidoxypropylmethyldimethoxysilane, such as KBM-402 manufactured by Shin-Etsu Chemical Co., Ltd., Z-6044 manufactured by Dow Corning Toray Co., Ltd., and SILA-ACE S520 manufactured by Nichibi Trading Co., Ltd.; 3-glycidoxypropyltrimethoxysilane, such as KBM-403 manufactured by Shin-Etsu Chemical Co., Ltd., A-187 manufactured by Momentive Performance Materials Japan LLC, Z-6040 manufactured by Dow Corning Toray Co., Ltd., GENIOSIL GF80 manufactured by Wacker Asahikasei Silicone Co., Ltd., and SILA-ACE S510 manufactured by Nichibi Trading Co., Ltd.; 3-glycidoxypropylmethyldiethoxysilane, such as KBE-402 manufactured by Shin-Etsu Chemical Co., Ltd.; 3-glycidoxypropyltriethoxysilane, such as KBE-403 manufactured by Shin-Etsu Chemical Co., Ltd., A-1871 manufactured by Momentive Performance Materials Japan LLC, and GENIOSIL GF82 manufactured by Wacker Asahikasei Silicone Co., Ltd.; glycidoxyoctyltrimethoxysilane, such as KBM-4803 manufactured by Shin-Etsu Chemical Co., Ltd.; *N*-2-(aminoethyl)-3-aminopropylmethyldimethoxysilane, such as KBM-602 manufactured by Shin-Etsu Chemical Co., Ltd., A-2120 manufactured by Momentive Performance Materials Japan LLC, GENIOSIL GF-95 manufactured by Wacker Asahikasei Silicone Co., Ltd., and SILA-ACE S310 manufactured by Nichibi Trading Co., Ltd.; *N*-2-(aminoethyl)-3-aminopropyltrimethoxysilane, such as KBM-603 manufactured by Shin-Etsu Chemical Co., Ltd., A-1120 manufactured by Momentive Performance Materials Japan LLC, A-1122 manufactured by Momentive Performance Materials Japan LLC, Z-6020 manufactured by Dow Corning Toray Co., Ltd., Z-6094 manufactured by Dow Corning Toray Co., Ltd., GENIOSIL GF-91 manufactured by Wacker Asahikasei Silicone Co., Ltd., and SILA-ACE S320 manufactured by Nichibi Trading Co., Ltd.; 3-aminopropyltrimethoxysilane, such as KBM-903 manufactured by Shin-Etsu Chemical Co., Ltd., A-1110 manufactured by Momentive Performance Materials Japan LLC, Z-6610 manufactured by Dow Corning Toray Co., Ltd., and SILA-ACE S360 manufactured by Nichibi Trading Co., Ltd.; 3-aminopropyltriethoxysilane, such as KBE-903, A-1100 manufactured by Momentive Performance Materials Japan LLC, Z-6011 manufactured by Dow Corning Toray Co., Ltd., and SILA-ACE S330 manufactured by Nichibi Trading Co., Ltd.; 3-triethoxysilyl-*N*-(1,3-dimethyl-butylidene)propylamine, such as KBE-9103, and SILA-ACE S340 manufactured by Nichibi Trading Co., Ltd.; *N*-phenyl-3-aminopropyltrimethoxysilane, such as KBM-573 manufactured by Shin-Etsu Chemical Co., Ltd., Y-9669 manufactured by Momentive Performance Materials Japan LLC, and Z-6883 manufactured by Dow Corning Toray Co., Ltd.; *N,N'*-bis[3-(trimethoxysilyl)propyl]ethylenediamine, such as SILA-ACE XS1003 manufactured by Nichibi Trading Co., Ltd.; *N*-(vinylbenzyl)-2-aminoethyl-3-aminopropyltrimethoxysilane hydrochloride, such as KBM-575 manufactured by Shin-Etsu Chemical Co., Ltd., Z-6032 manufactured by Dow Corning Toray Co., Ltd., and SILA-ACE S350 manufactured by Nichibi Trading Co., Ltd.; tris(trimethoxysilylpropyl)isocyanurate, such as KBM-9659 manufactured by Shin-Etsu Chemical Co., Ltd.; 3-mercaptopropylmethyldimethoxysilane, such as KBM-802 manufactured by Shin-Etsu Chemical Co., Ltd., and Z-6852 manufactured by Dow Corning Toray Co., Ltd.; 3-mercaptopropyltrimethoxysilane, such as KBM-803 manufactured by Shin-Etsu Chemical Co., Ltd., A-189 manufactured by Momentive Performance Materials Japan LLC, Z-6062 manufactured by Dow Corning Toray Co., Ltd., and SILA-ACE S810 manufactured by Nichibi Trading Co., Ltd.; 3-mercaptopropyltriethoxysilane, such as A-1891 manufactured by Momentive Performance Materials Japan LLC, and Z-6911 manufactured by Dow Corning Toray Co., Ltd.; 3-ureidopropyltriethoxysilane, such as A-1160 manufactured by Momentive Performance Materials Japan LLC; 3-ureidopropyltrialkoxysilane, such as KBE-585 manufactured by Shin-Etsu Chemical Co., Ltd.; bis(triethoxysilylpropyl)tetrasulfide, such as KBE-846 manufactured by Shin-Etsu Chemical Co., Ltd.; 3-octanoylthio-1-propyltriethoxysilane, such as A-LINK599 manufactured by Momentive Performance Materials Japan LLC; 3-isocyanate propyltriethoxysilane, such as KBE-9007 manufactured by Shin-Etsu Chemical Co., Ltd., and A-1310 manufactured by Momentive Performance Materials Japan LLC; and 3-isocyanate propyltrimethoxysilane, such as Y-5187 manufactured by Momentive Performance Materials Japan LLC, and GENIOSIL GF40 manufactured by Wacker Asahikasei Silicone Co., Ltd.

When a silane coupling agent is incorporated into the additive composition of the present invention, the content thereof is preferably 0.01 to 5.0 parts by mass, more preferably 0.05 to 3.0 parts by mass, still more preferably 0.1 to 2.0 parts by mass, with respect to a total of 100 parts by mass of the component (A) and the component (C) that are contained in the additive composition. The silane coupling agent may be incorporated into the additive composition of the present invention in advance, or may be incorporated into a synthetic resin at the time of blending the additive composition with the synthetic resin.

In the additive composition of the present invention, from the standpoints of heat resistance and weather resistance as well as reducing the risk of corrosion of a processing machine, a hydrotalcite compound may be incorporated as required within a range that does not impair the effects of the present invention. In the additive composition of the present invention, the term "hydrotalcite compound" refers to a carbonate double salt compound of magnesium and/or zinc and aluminum. The hydrotalcite compound may be a naturally-occurring or synthetic hydrotalcite. Examples of a method of synthesizing a synthetic hydrotalcite include known methods that are described in JPS46-2280B1, JPS50-30039B1, JPS51-29129B1, JPS61-174270A. and the like. In the additive composition of the present invention, the above-described hydrotalcites can be used without any restriction in terms of the crystal structure, the crystal grain system, the presence or absence of crystal water, the amount of crystal water, and the like.

The hydrotalcite compound may be treated with perchloric acid, and it is also possible to use a hydrotalcite compound whose surface is coated with, for example, a higher fatty acid such as stearic acid, a higher fatty acid metal salt such as alkali metal oleate, a metal organic sulfonate such as alkali metal dodecylbenzenesulfonate, a higher fatty acid amide, a higher fatty acid ester, or a wax.

The hydrotalcite compound is preferably a compound represented by the following Formula (5):

Mgₓ₁Znₓ₂Al₂(OH)_{2(X1+X2)+4}·CO₃·mH₂O (5).

In Formula (5), x1 and x2 each represent a number that satisfies the conditions represented by the following equations, and m represents a real number: 0 ≤ x2/x1 < 10, and 2 ≤ (x1 + x2) < 20.

As the hydrotalcite compound, a commercially available product can be used, and examples thereof include DHT-4 (hydrotalcite: manufactured by Kyowa Chemical Industry Co., Ltd.), DHT-4A (hydrotalcite: manufactured by Kyowa Chemical Industry Co., Ltd.), MAGCELER 1 (hydrotalcite: manufactured by Kyowa Chemical Industry Co., Ltd.), ALCAMIZER 1 (hydrotalcite: manufactured by Kyowa Chemical Industry Co., Ltd.), ALCAMIZER 2 (hydrotalcite: manufactured by Kyowa Chemical Industry Co., Ltd.), ALCAMIZER 4 (ALCAMIZER P-93) (zinc-modified hydrotalcite: manufactured by Kyowa Chemical Industry Co., Ltd.), ALCAMIZER 7 (zinc-modified hydrotalcite: manufactured by Kyowa Chemical Industry Co., Ltd.), and ALCAMIZER 5 (perchloric acid-treated hydrotalcite: manufactured by Kyowa Chemical Industry Co., Ltd.), among which DHT-4A (hydrotalcite: manufactured by Kyowa Chemical Industry Co., Ltd.) is particularly preferred.

When a hydrotalcite compound is incorporated, the content thereof with respect to a total of 100 parts by mass of the component (A) and the component (C) that are contained in the additive composition is preferably 0.01 to 5 parts by mass and, from the standpoints of heat resistance and weather resistance as well as reducing the risk of corrosion of a processing machine, the content of the hydrotalcite compound is more preferably 0.05 to 4 parts by mass, still more preferably 0.1 to 2 parts by mass. The hydrotalcite compound may be incorporated into the additive composition of the present invention in advance, or may be incorporated into a synthetic resin at the time of blending the additive composition with the synthetic resin.

In the additive composition of the present invention, a flame retardant aid other than the above-described metal oxides may also be incorporated as required within a range that does not impair the effects of the present invention. This flame retardant aid is, for example, a polyhydric alcohol compound.

The "polyhydric alcohol compound" refers to a compound in which plural hydroxyl groups are bound and which is added as a flame retardant aid for improving the flame retardancy, although it may overlap with the above-described polyhydric alcohol compound. Examples of the polyhydric alcohol compound used as a flame retardant aid include pentaerythritol, dipentaerythritol, tripentaerythritol, polypentaerythritol, neopentyl glycol, trimethylolpropane, ditrimethylolpropane, 1,3,5-tris(2-hydroxyethyl)isocyanurate, polyethylene glycol, glycerin, diglycerin, mannitol, maltitol, lactitol, sorbitol, erythritol, xylitol, xylose, sucrose, trehalose, inositol, fructose, maltose, and lactose. Among these polyhydric alcohol compounds, a pentaerythritol or a pentaerythritol condensate, such as pentaerythritol, dipentaerythritol, tripentaerythritol or polypentaerythritol, is preferred, a pentaerythritol condensate is more preferred, and dipentaerythritol is particularly preferred. Further, 1,3,5-tris(2-hydroxyethyl)isocyanurate and sorbitol can be suitably used as well.

The pentaerythritol condensate may be a mixture of pentaerythritol and a pentaerythritol condensate. When a polyhydric alcohol compound is incorporated, from the standpoint of flame retardancy, the content thereof is preferably 0.5 to 15 parts by mass, more preferably 2 to 12 parts by mass, still more preferably 5 to 10 parts by mass, with respect to a total of 100 parts by mass of the component (A) and the component (C) that are contained in the additive composition. The polyhydric alcohol compound may be incorporated into the additive composition of the present invention in advance, or may be incorporated into a synthetic resin at the time of blending the additive composition with the synthetic resin.

In the additive composition of the present invention, a lubricant may also be incorporated as required within a range that does not impair the effects of the present invention. Examples of the lubricant include: pure hydrocarbon-based lubricants, such as liquid paraffins, natural paraffins, microwaxes, synthetic paraffins, low-molecular-weight polyethylenes, and polyethylene waxes; halogenated hydrocarbon-based lubricants; fatty acid-based lubricants, such as higher fatty acids and oxy fatty acids; fatty acid amide-based lubricants, such as fatty acid amides and bis-fatty acid amides; ester-based lubricants, such as lower alcohol esters of fatty acids, polyhydric alcohol esters of fatty acids (e.g., glyceride), polyglycol esters of fatty acids, and fatty alcohol esters of fatty acids (ester waxes); metallic soaps; fatty alcohols; polyhydric alcohols; polyglycols; polyglycerols; partial esters of fatty acids and polyhydric alcohols; partial ester-based lubricants composed of fatty acid, polyglycol and polyglycerol; silicone oils; and mineral oils. Two or more of these lubricants may be used in combination.

When a lubricant is incorporated, the content thereof is preferably 0.05 to 10 parts by mass, more preferably 0.1 to 5 parts by mass, with respect to a total of 100 parts by mass of the component (A) and the component (C) that are contained in the additive composition. The lubricant may be incorporated into the additive composition of the present invention in advance, or may be incorporated into a synthetic resin at the time of blending the additive composition with the synthetic resin.

In the additive composition of the present invention, as required, one or more organic or inorganic flame retardants or flame retardant aids may be further used within a range that does not impair the effects of the present invention. Examples of such flame retardants and flame retardant aids include metal hydroxides, phosphate-based flame retardants, condensed phosphate-based flame retardants, inorganic phosphorus-based flame retardants, silicone-based flame retardants, metal oxides, boric acid compounds, expandable graphites, other inorganic flame retardant aids, and other organic flame retardants. These flame retardants or flame retardant aids may be incorporated into the additive composition of the present invention in advance, or may be incorporated into a synthetic resin at the time of blending the additive composition with the synthetic resin.

Examples of the metal hydroxides include magnesium hydroxide, aluminum hydroxide, calcium hydroxide, barium hydroxide, zinc hydroxide, and KISUMA 5A (trademark of magnesium hydroxide manufactured by Kyowa Chemical Industry Co., Ltd.).

Examples of the phosphate-based flame retardants include trimethyl phosphate, triethyl phosphate, tributyl phosphate, tributoxyethyl phosphate, trischloroethyl phosphate, trisdichloropropyl phosphate, triphenyl phosphate, tricresyl phosphate, cresyldiphenyl phosphate, trixylenyl phosphate, octyldiphenyl phosphate, xylenyldiphenyl phosphate, tris(isopropylphenyl)phosphate, 2-ethylhexyldiphenyl phosphate, *t*-butylphenyldiphenyl phosphate, bis(t-butylphenyl)phenyl phosphate, tris(*t*-butylphenyl)phosphate, isopropylphenyldiphenyl phosphate, bis(isopropylphenyl)diphenyl phosphate, and tris(isopropylphenyl)phosphate.

Examples of the condensed phosphate-based flame retardants include 1,3-phenylene-bis(diphenyl phosphate), 1,3-phenylene-bis(dixylenyl phosphate), bisphenol A-bis(diphenyl phosphate), naphthalene-2,5-diyl-tetraphenyl bis(phosphate), [1,1'-biphenyl]-4,4'-diyl-tetraphenyl bis(phosphate), [1,1'-biphenyl]-4,4'-diyl-tetrakis(2,6-dimethylphenyl)bis(phosphate), tetraphenyl(thiobis(4,1-phenylene))bis(phosphate), and tetraphenyl(sulfonyl-bis(4,1-phenylene))bis(phosphate).

Examples of the inorganic phosphorus-based flame retardants include red phosphorus.

Examples of other inorganic flame retardant aids include inorganic compounds, such as titanium oxide, aluminum oxide, magnesium oxide, and hydrotalcite; and surface-treated products thereof. Specifically, for example, a variety of commercially available products, such as TIPAQUE R-680 (trademark of titanium oxide manufactured by Ishihara Sangyo Kaisha, Ltd.), KYOWAMAG 150 (trademark of magnesium oxide manufactured by Kyowa Chemical Industry Co., Ltd.), DHT-4A (hydrotalcite, manufactured by Kyowa Chemical Industry Co., Ltd.) and ALCAMIZER 4 (trademark of zinc-modified hydrotalcite manufactured by Kyowa Chemical Industry Co., Ltd.), can be used.

In the additive composition of the present invention, as required, a phosphorus-based antioxidant, a thioether-based antioxidant, an ultraviolet absorber, a hindered amine-based light stabilizer, an age inhibitor and the like may be incorporated as well. These components may be incorporated into the additive composition of the present invention in advance, or may be incorporated into a synthetic resin at the time of blending the additive composition with the synthetic resin. It is preferred to stabilize the synthetic resin by incorporating these components.

Examples of the phosphorus-based antioxidant include trisnonylphenyl phosphite, tris[2-*tert*-butyl-4-(3-*tert*-butyl-4-hydroxy-5-methylphenylthio)-5-methylphenyl]phosphite, tridecyl phosphite, octyldiphenyl phosphite, di(decyl)monophenyl phosphite, di(tridecyl)pentaerythritol diphosphite, di(nonylphenyl)pentaerythritol diphosphite, bis(2,4-di-*tert*-butylphenyl)pentaerythritol diphosphite, bis(2,6-di-*tert*-butyl-4-methylphenyl)pentaerythritol diphosphite, bis(2,4,6-tri-*tert*-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-*n*-butylidene-bis(2-*tert*-butyl-5-methylphenol)diphosphite, hexa(tridecyl)-1,1,3-tris(2-methyl-4-hydroxy-5-*tert*-butylphenyl)butane triphosphite, tetrakis(2,4-di-*tert*-butylphenyl)biphenylene diphosphonite, 9,10-dihydro-9-oxa-10-phosphaphenanthrene-10-oxide, 2,2'-methylene-bis(4,6-*tert*-butylphenyl)-2-ethylhexyl phosphite, 2,2'-methylene-bis(4,6-*tert*-butylphenyl)-octadecyl phosphite, 2,2'-ethylidene-bis(4,6-di-*tert*-butylphenyl)fluorophosphite, tris(2-[(2,4,8,10-tetrakis-*tert*-butyldibenzo[d,f] [1,3,2]dioxaphosphepin-6-yl)oxy]ethyl)amine, and phosphite of 2-ethyl-2-butylpropylene glycol and 2,4,6-tri-*tert*-butylphenol. When incorporated into a synthetic resin, these phosphorus-based antioxidants are used in an amount of preferably 0.001 to 10 parts by mass, more preferably 0.05 to 5 parts by mass, with respect to 100 parts by mass of the synthetic resin.

Examples of the thioether-based antioxidant include: dialkyl thiodipropionates, such as dilauryl thiodipropionate, dimyristyl thiodipropionate, and distearyl thiodipropionate; and pentaerythritol tetra(*β*-alkylmercaptopropionic acid) esters. When incorporated into a synthetic resin, these thioether-based antioxidants are used in an amount of preferably 0.001 to 10 parts by mass, more preferably 0.05 to 5 parts by mass, with respect to 100 parts by mass of the synthetic resin.

Examples of the ultraviolet absorber include: 2-hydroxybenzophenones, such as 2,4-dihydroxybenzophenone, 2-hydroxy-4-methoxybenzophenone, 2-hydroxy-4-octoxybenzophenone, and 5,5'-methylene-bis(2-hydroxy-4-methoxybenzophenone); 2-(2'-hydroxyphenyl)benzotriazoles, such as 2-(2'-hydroxy-5'-methylphenyl)benzotriazole, 2-(2'-hydroxy-3',5'-di-*tert*-butylphenyl)-5-chlorobenzotriazole, 2-(2'-hydroxy-3'-*tert*-butyl-5'-methylphenyl)-5-chlorobenzotriazole, 2-(2'-hydroxy-5'-*tert*-octylphenyl)benzotriazole, 2-(2'-hydroxy-3',5'-dicumylphenyl)benzotriazole, 2,2'-methylene-bis(4-*tert*-octyl-6-(benzotriazolyl)phenol), and 2-(2'-hydroxy-3'-*tert*-butyl-5'-carboxyphenyl)benzotriazole; benzoates, such as phenyl salicylate, resorcinol monobenzoate, 2,4-di-*tert*-butylphenyl-3,5-di-*tert*-butyl-4-hydroxybenzoate, 2,4-di-*tert*-amylphenyl-3,5-di-*tert*-butyl-4-hydroxybenzoate, and hexadecyl-3,5-di-*tert*-butyl-4-hydroxybenzoate; substituted oxanilides, such as 2-ethyl-2'-ethoxyoxanilide and 2-ethoxy-4'-dodecyloxanilide; cyanoacrylates, such as ethyl-*α*-cyano-*β*,*β*-diphenylacrylate and methyl-2-cyano-3-methyl-3-(*p*-methoxyphenyl)acrylate; and triaryltriazines, such as 2-(2-hydroxy-4-octoxyphenyl)-4,6-bis(2,4-di-*tert*-butylphenyl)-*s*-triazine, 2-(2-hydroxy-4-methoxyphenyl)-4,6-diphenyl-*s*-triazine, and 2-(2-hydroxy-4-propoxy-5-methylphenyl)-4,6-bis(2,4-di-*tert*-butylphenyl)-*s*-triazine. When incorporated into a synthetic resin, these ultraviolet absorbers are used in an amount of preferably 0.001 to 30 parts by mass, more preferably 0.05 to 10 parts by mass, with respect to 100 parts by mass of the synthetic resin.

Examples of the hindered amine-based light stabilizer include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, bis(1,2,2,6,6-pentamethyl-4-piperidyl)sebacate, bis(1-octoxy-2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)-bis(tridecyl)-1,2,3,4-butanetetracarboxylate, bis(1,2,2,6,6-pentamethyl-4-piperidyl)-bis(tridecyl)-1,2,3,4-butanetetracarboxylate, bis(1,2,2,6,6-pentamethyl-4-piperidyl)-2-butyl-2-(3,5-di-*tert*-butyl-4-hydroxybenzyl)malonate, 1,2,2,6,6-pentamethyl-4-piperidyl methacrylate, poly[{6-(1,1,3,3-tetramethylbutyl)amino-1,3,5-triazine-2,4-diyl}{(2,2,6,6-tetramethyl-4-piper idyl)imino }hexamethylene{(2,2,6,6-tetramethyl-4-piperidyl)imino}], 1,2,3,4-butanecarboxylic acid/2,2-bis(hydroxymethyl)-1,3-propanediol/3-hydroxy-2,2-dimethylpropanal/1,2,2,6,6-pent amethyl-4-piperidinyl ester polycondensate, bis(1,2,2,6,6-pentamethyl-4-piperidyl)=decane dioate/methyl=1,2,2,6,6-pentamethyl-4-piperidyl=sebacate mixture, 2,2,6,6-tetramethyl-4-piperidyl methacrylate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/dibromoethane polycondensates, 1,6-bis(2,2,6,6-tetramethyl-4-piperidylamino)hexane/2,4-dichloro-6-morpholino-*s*-triazine polycondensates, 1,6-bis(2,2,6,6-tetramethyl-4-piperidylamino)hexane/2,4-dichloro-6-*tert*-octylamino-*s*-triazin e polycondensates, 1,5,8,12-tetrakis[2,4-bis(*N*-butyl-*N*-(2,2,6,6-tetramethyl-4-piperidyl)amino)-*s*-triazine-6-yl]-1, 5,8,12-tetraazadodecane, 1,5,8,12-tetrakis[2,4-bis(*N*-butyl-*N*-(1,2,2,6,6-pentamethyl-4-piperidyl)amino)-*s*-triazine-6-yl] -1,5,8,12-tetraazadodecane, 1,6,11-tris[2,4-bis(*N*-butyl-*N*-(2,2,6,6-tetramethyl-4-piperidyl)amino)-*s*-triazine-6-ylamino]un decane, 1,6,11-tris[2,4-bis(*N*-butyl-*N*-(1,2,2,6,6-pentamethyl-4-piperidyl)amino)-*s*-triazine-6-ylamino] undecane, 3,9-bis[1,1-dimethyl-2-{tris(2,2,6,6-tetramethyl-4-piperidyloxycarbonyl)butylcarbonyloxy}et hyl]-2,4,8,10-tetraoxaspiro[5.5]undecane, 3,9-bis[1,1-dimethyl-2-{tris(1,2,2,6,6-pentamethyl-4-piperidyloxycarbonyl)butylcarbonyloxy }ethyl]-2,4,8,10-tetraoxaspiro[5.5]undecane, bis(1-undecyloxy-2,2,6,6-tetramethylpiperidin-4-yl)carbonate, 2,2,6,6-tetramethyl-4-piperidyl hexadecanoate, and 2,2,6,6-tetramethyl-4-piperidyl octadecanoate. When incorporated into a synthetic resin, these hindered amine-based light stabilizers are used in an amount of preferably 0.001 to 30 parts by mass, more preferably 0.05 to 10 parts by mass, with respect to 100 parts by mass of the synthetic resin.

Examples of the age inhibitor include naphthylamine-based age inhibitors, diphenylamine-based age inhibitors, *p*-phenyldiamine-based age inhibitors, quinoline-based age inhibitors, hydroquinone derivatives, monophenol-based age inhibitors, thiobisphenol-based age inhibitors, hindered phenol-based age inhibitors, and phosphite-based age inhibitors. When incorporated into a synthetic resin, these age inhibitors are used in an amount of preferably 0.001 to 10 parts by mass, more preferably 0.05 to 5 parts by mass, with respect to 100 parts by mass of the synthetic resin.

In the additive composition of the present invention, a phenolic antioxidant other than the component (B) may be incorporated as well; however, a phenolic antioxidant other than the component (B) cannot exert excellent heat resistance and flame retardancy. Needless to say, there is no problem to use such a phenolic antioxidant in combination with the component (B).

Examples of the phenolic antioxidant other than the component (B) include 2,6-di-*tert*-butyl-*p*-cresol, 2,6-diphenyl-4-octadecyloxyphenol, distearyl(3,5-di-*tert*-butyl-4-hydroxybenzyl)phosphonate, 1,6-hexamethylene-bis[(3,5-di-*tert*-butyl-4-hydroxyphenyl)promionic acid amide], 4,4'-thiobis(6-*tert*-butyl-*m*-cresol), 2,2'-methylene-bis(4-methyl-6-*tert*-butylphenol), 2,2'-methylene-bis(4-ethyl-6-*tert*-butylphenol), 4,4'-butylidene-bis(6-*tert*-butyl-*m*-cresol), 2,2'-ethylidene-bis(4,6-di-*tert*-butylphenol), 2,2'-ethylidene-bis(4-*sec*-butyl-6-*tert*-butylphenol), 1,1,3-tris(2-methyl-4-hydroxy-5-*tert*-butylphenyl)butane, 2-*tert*-butyl-4-methyl-6-(2-acryloyloxy-3-*tert*-butyl-5-methylbenzyl)phenol, stearyl(3,5-di-*tert*-butyl-4-hydroxyphenyl)propionate, tetrakis[3-(3,5-di-*tert*-butyl-4-hydroxyphenyl)propionic acid methyl]methane, thiodiethylene glycol-bis[(3,5-di-*tert*-butyl-4-hydroxyphenyl)propionate], 1,6-hexamethylene-bis[(3,5-di-*tert*-butyl-4-hydroxyphenyl)propionate], bis [3,3-bis(4-hydroxy-3-*tert*-butylphenyl)butyric acid]glycol ester, bis[2-*tert*-butyl-4-methyl-6-(2-hydroxy-3-*tert*-butyl-5-methylbenzyl)phenyl]terephthalate, 3,9-bis[1,1-dimethyl-2-[(3-*tert*-butyl-4-hydroxy-5-methylphenyl)propionyloxy}ethyl]-2,4,8,1 0-tetraoxaspiro[5,5]undecane, and triethylene glycol-bis[(3-*tert*-butyl-4-hydroxy-5-methylphenyl)propionatel.

In the additive composition of the present invention, a reinforcing material may also be incorporated as an optional component within a range that does not impair the effects of the present invention. This component may be incorporated into a synthetic resin at the time of blending the additive composition of the present invention with the synthetic resin. As the reinforcing material, a fiber-form, plate-form, particle-form or powder-form reinforcing material that is usually used for reinforcement of a synthetic resin can be used. Specific examples thereof include: inorganic fibrous reinforcing materials, such as glass fibers, asbestos fibers, carbon fibers, graphite fibers, metal fibers, potassium titanate whiskers, aluminum borate whiskers, magnesium-based whiskers, silicon-based whiskers, wollastonite, sepiolite, asbestos, slag fibers, zonolite, ellestadite, gypsum fibers, silica fibers, silica-alumina fibers, zirconia fibers, boron nitride fibers, silicon nitride fibers, and boron fibers; organic fibrous reinforcing materials, such as polyester fibers, nylon fibers, acrylic fibers, regenerated cellulose fibers, acetate fibers, kenaf, ramie, cotton, jute, hemp, sisal, flax, linen, silk, Manila hemp, sugarcane, wood pulp, wastepaper, used paper, and wool; and plate-form and particle-form reinforcing materials, such as glass flake, non-swelling mica, graphites, metal foils, ceramic beads, clay, mica, sericite, zeolite, bentonite, dolomite, kaolin, fine powder silicic acid, feldspar powder, potassium titanate, shirasu balloon, calcium carbonate, magnesium carbonate, barium sulfate, calcium oxide, aluminum oxide, titanium oxide, aluminum silicate, silicon oxide, gypsum, novaculite, dawsonite, and white clay. These reinforcing materials may be coated or bundled with a thermoplastic resin such as an ethylene/vinyl acetate copolymer or a thermosetting resin such as an epoxy resin, or may be treated with a coupling agent, such as aminosilane or epoxysilane.

In the additive composition of the present invention, a nucleating agent may be further incorporated as an optional component within a range that does not impair the effects of the present invention. As the nucleating agent, one which is generally used as a nucleating agent of a polymer can be used as appropriate and, in the present invention, any of such inorganic nucleating agents and organic nucleating agents can be used. These components may be incorporated into a synthetic resin at the time of blending the additive composition of the present invention with the synthetic resin.

Specific examples of the inorganic nucleating agents include kaolinite, synthetic mica, clay, zeolite, silica, graphite, carbon black, magnesium oxide, titanium oxide, calcium sulfide, boron nitride, calcium carbonate, barium sulfate, aluminum oxide, neodymium oxide, and metal salts of phenylphosphonate. These inorganic nucleating agents may be modified with an organic substance so as to improve their dispersion in the composition.

Specific examples of the organic nucleating agents include: organic metal carboxylates, such as sodium benzoate, potassium benzoate, lithium benzoate, calcium benzoate, magnesium benzoate, barium benzoate, lithium terephthalate, sodium terephthalate, potassium terephthalate, calcium oxalate, sodium laurate, potassium laurate, sodium myristate, potassium myristate, calcium myristate, sodium octacosanoate, calcium octacosanoate, sodium stearate, potassium stearate, lithium stearate, calcium stearate, magnesium stearate, barium stearate, sodium montanate, calcium montanate, sodium toluate, sodium salicylate, potassium salicylate, zinc salicylate, aluminum dibenzoate, potassium dibenzoate, lithium dibenzoate, sodium *β*-naphthalate, and sodium cyclohexane carboxylate; organic sulfonates, such as sodium *p*-toluene sulfonate and sodium sulfoisophthalate; carboxylic acid amides, such as stearic acid amide, ethylene-bis-lauric acid amide, palmitic acid amide, hydroxystearic acid amide, erucic acid amide, and trimesic acid tris(t-butylamide); benzylidene sorbitol and derivatives thereof; phosphorus compound metal salts, such as sodium-2,2'-methylene-bis(4,6-di-*t*-butylphenyl)phosphate; and 2,2-methylbis(4,6-di-*t*-butylphenyl)sodium.

Further, to the additive composition of the present invention, for the purpose of neutralizing a residual catalyst in the synthetic resin, a known neutralizer may be added as an optional component within a range that does not impair the effects of the present invention. Examples of the neutralizer include: fatty acid metal salts, such as calcium stearate, lithium stearate, and sodium stearate; and fatty acid amide compounds, such as ethylene-bis(stearamide), ethylene-bis(12-hydroxystearamide) and stearic acid amide, and these neutralizers may be used in the form of a mixture.

Still further, in the additive composition of the present invention, an acrylic processing aid may be incorporated as an optional component within a range that does not impair the effects of the present invention. As the acrylic processing aid, one obtained by polymerizing a single kind of (meth)acrylic acid ester or copolymerizing two or more kinds of (meth)acrylic acid esters can be used. This component may be incorporated into a synthetic resin at the time of blending the additive composition of the present invention with the synthetic resin. Examples of the (meth)acrylic acid ester(s) to be polymerized/copolymerized include (meth)acrylates, such as methyl acrylate, methyl methacrylate, ethyl acrylate, ethyl methacrylate, *n*-propyl acrylate, isopropyl acrylate, *n*-propyl methacrylate, isopropyl methacrylate, *n*-butyl acrylate, isobutyl acrylate, *t*-butyl methacrylate, *n*-hexyl acrylate, *n*-hexyl methacrylate, 2-ethylhexyl acrylate, 2-ethylhexyl methacrylate, dodecyl methacrylate, and tridecyl methacrylate. Other examples include (meth)acrylic acid and hydroxy group-containing (meth)acrylates.

In the additive composition of the present invention, a plasticizer may be further incorporated as an optional component within a range that does not impair the effects of the present invention. As the plasticizer, one which is generally used as a plasticizer of a polymer can be used as appropriate, and examples thereof include polyester-based plasticizers, glycerol-based plasticizers, polycarboxylic acid ester-based plasticizers, polyalkylene glycol-based plasticizers, ether ester-based plasticizers, and epoxy-based plasticizers. This component may be incorporated into a synthetic resin at the time of blending the additive composition of the present invention with the synthetic resin.

In addition to the above, in the additive composition of the present invention, an additive(s) normally used in a synthetic resin, such as a cross-linking agent, an antistatic agent, a metallic soap, a filler, an anti-fogging agent, a plate-out inhibitor, a surface treatment agent, a fluorescent agent, an antifungal agent, a disinfectant, a foaming agent, a metal inactivator, a mold release agent, a pigment and/or a processing aid other than the above-described acrylic processing aid, can be incorporated as required within a range that does not impair the effects of the present invention. These components may be incorporated into a synthetic resin at the time of blending the additive composition of the present invention with the synthetic resin.

For mixing the constituents of the additive composition of the present invention or mixing the additive composition with other components, a variety of mixing machines can be employed. The mixing may be performed with heating. Examples of the mixing machines that can be employed include a tumbler mixer, a Henschel mixer, a ribbon blender, a V-type mixer, a W-type mixer, a super mixer, and a Nauta mixer.

The additive composition of the present invention can impart excellent heat resistance and flame retardancy to a synthetic resin; therefore, the additive composition of the present invention can be incorporated into a synthetic resin, and the resultant is preferably used as a flame-retardant synthetic resin composition having excellent heat resistance. The flame-retardant synthetic resin composition of the present invention yields a molded article having excellent heat resistance and flame retardancy.

Next, the flame-retardant synthetic resin composition of the present invention will be described.

The flame-retardant synthetic resin composition of the present invention is obtained by incorporating the additive composition of the present invention into a synthetic resin.

Specific examples of synthetic resins to be flame-proofed by the additive composition of the present invention include: *α*-olefin polymers, such as polypropylenes, high-density polyethylenes, low-density polyethylenes, linear low-density polyethylenes, cross-linked polyethylenes, ultrahigh-molecular-weight polyethylenes, polybutene-1, and poly-3-methylpentene; polyolefins and copolymers thereof, such as ethylene-vinyl acetate copolymers, ethylene-ethyl acrylate copolymers, and ethylene-propylene copolymers; halogen-containing resins, such as polyvinyl chloride, polyvinylidene chlorides, chlorinated polyethylenes, chlorinated polypropylenes, polyvinylidene fluorides, chlorinated rubbers, vinyl chloride-vinyl acetate copolymers, vinyl chloride-ethylene copolymers, vinyl chloride-vinylidene chloride copolymers, vinyl chloride-vinylidene chloride-vinyl acetate ternary copolymers, vinyl chloride-acrylate copolymers, vinyl chloride-maleate copolymers, and vinyl chloride-cyclohexylmaleimide copolymers; petroleum resins; coumarone resins; polystyrenes; polyvinyl acetates; acrylic resins; polymethyl methacrylates; polyvinyl alcohols; polyvinyl formals; polyvinyl butyrals; aromatic polyesters, such as polyalkylene terephthalates (e.g., polyethylene terephthalate, polybutylene terephthalate, and polycyclohexane dimethylene terephthalate) and polyalkylene naphthalates (e.g., polyethylene naphthalate and polybutylene naphthalate); linear polyesters, such as polytetramethylene terephthalate; degradable aliphatic polyesters, such as polyhydroxy butyrate, polycaprolactone, polybutylene succinate, polyethylene succinate, polylactic acid, polymalic acid, polyglycolic acid, polydioxane, and poly(2-oxetanone); thermoplastic resins and blends thereof, such as polyamides (e.g., polyphenylene oxide, polycaprolactam, and polyhexamethylene adipamide), polycarbonates, branched polycarbonates, polyacetals, polyphenylene sulfides, polyurethanes, and cellulose-based resins; thermosetting resins, such as phenol resins, urea resins, melamine resins, epoxy resins, and unsaturated polyester resins; fluorocarbon resins; silicone resins; silicone rubber polyether sulfones; polysulfones; polyphenylene ethers; polyether ketones; polyether ether ketones; and liquid crystal polymers. Other examples include isoprene rubbers, butadiene rubbers, acrylonitrile-butadiene copolymer rubbers, styrene-butadiene copolymer rubbers, fluorine rubbers, and silicone rubbers.

Specific examples of synthetic resins to be flame-proofed further include olefin-based thermoplastic elastomers, styrene-based thermoplastic elastomers, polyester-based thermoplastic elastomers, nitrile-based thermoplastic elastomers, nylon-based thermoplastic elastomers, vinyl chloride-based thermoplastic elastomers, polyamide-based thermoplastic elastomers, and polyurethane-based thermoplastic elastomers. These synthetic resins may be used individually, or two or more thereof may be used in combination. Further, these synthetic resins may be alloyed as well.

In the present invention, the above-described synthetic resins can be used regardless of, for example, the molecular weight, the polymerization degree, the density, the softening point, the insoluble component-to-solvent ratio, the degree of stereoregularity, the presence or absence of a catalyst residue, the type and blend ratio of each material monomer, and the type of a polymerization catalyst (e.g., a Ziegler catalyst or a metallocene catalyst). Among above-described synthetic resins, polyolefin-based resins are preferred since excellent flame retardancy can be imparted thereto.

Examples of the polyolefin-based resins include: *α*-olefin polymers, such as polyethylenes, low-density polyethylenes, linear low-density polyethylenes, high-density polyethylenes, polypropylenes, homopolypropylenes, random copolymer polypropylenes, block copolymer polypropylenes, impact copolymer polypropylenes, high-impact copolymer polypropylenes, isotactic polypropylenes, syndiotactic polypropylenes, hemi-isotactic polypropylenes, maleic anhydride-modified polypropylenes, polybutenes, cycloolefin polymers, stereo block polypropylenes, poly-3-methyl-1-butenes, poly-3-methyl-1-pentenes, and poly-4-methyl-1-pentenes; and *α*-olefin copolymers, such as ethylene-propylene block or random copolymers, ethylene-methyl methacrylate copolymers, and ethylene-vinyl acetate copolymers.

In the synthetic resin composition of the present invention, from the standpoints of heat resistance and flame retardancy, a total amount of the components (A) and (C) contained in the additive composition is preferably 10% by mass to less than 70% by mass, more preferably 15% by mass to less than 60% by mass, still more preferably 20% by mass to less than 50% by mass. When the total amount of the components (A) and (C) is less than 10% by mass, sufficient flame retardancy may not be exerted, while when the amount is 70% by mass or greater, the physical properties intrinsic to the resin may be deteriorated.

Next, the molded article of the present invention will be described.

The molded article of the present invention is obtained from the flame-retardant synthetic resin composition of the present invention. A molded article having excellent heat resistance and flame retardancy can be obtained by molding the synthetic resin composition of the present invention. A molding method is not particularly restricted, and examples thereof include extrusion processing, calender processing, injection molding, rolling, compression molding, and blow molding. Molded articles of various shapes, such as resin plates, sheets, films, fibers and special shape articles, can be produced by these methods.

The synthetic resin composition of the present invention and a molded article thereof can be used for housings (e.g., frames, casings, covers, and exterior materials) and components of electric vehicles, machines, electric/electronic appliances, office-automation equipment and the like, as well as automobile interior and exterior materials.

The synthetic resin composition of the present invention and a molded article thereof can be used in a wide range of industrial fields, including the fields of electricity/electronics/communication, agriculture/forestry/fisheries, mining, construction, foods, textiles, clothing, health care, coal, petroleum, rubber, leather, automobiles, precision instruments, wood materials, building materials, civil engineering, furniture, printing, and musical instruments. More specifically, the synthetic resin composition of the present invention and a molded article thereof can be applied to, for example, office supplies and office-automation equipment, such as printers, personal computers, word processors, keyboards, PDA (Personal Digital Assistant) devices, telephones, copy machines, facsimile machines, ECRs (electronic cash registers), electronic calculators, electronic organizers, cards, holders, and stationery; home electrical appliances, such as laundry machines, refrigerators, vacuum cleaners, microwave ovens, lighting fixtures, gaming machines, irons, and foot warmers; audio-visual equipment, such as TVs, video tape recorders, video cameras, radio-cassette recorders, tape recorders, mini discs, CD players, speakers, and liquid crystal displays; electric and electronic components, such as connectors, relays, capacitors, switches, printed circuit boards, coil bobbins, semiconductor sealing materials, LED sealing materials, electric wires, cables, transformers, deflection yokes, distribution boards, and clocks; housings (e.g., frames, casings, covers, and exterior materials) and components of communication equipment, office-automation equipment and the like; and automobile interior and exterior materials.

The synthetic resin composition of the present invention and a molded article thereof can also be used in other various applications, for example, materials of automobiles, hybrid cars, electric cars, vehicles, ships, airplanes, buildings and houses, as well as construction and civil engineering materials, such as seats (e.g., stuffing and cover materials), belts, ceiling covers, convertible tops, armrests, door trims, rear package trays, carpets, mats, sun visors, wheel covers, mattress covers, air-bags, insulating materials, straps, strap belts, wire coating materials, electric insulating materials, paints, coating materials, veneer materials, floor materials, baffle walls, carpets, wallpapers, wall decorating materials, exterior materials, interior materials, roof materials, deck materials, wall materials, pillar materials, floor boards, fence materials, framework and molding materials, window and door-shaping materials, shingle boards, sidings, terraces, balconies, soundproof boards, heat insulating boards, and window materials; and household articles and sporting goods, such as clothing materials, curtains, bed linens, plywood boards, synthetic fiber boards, rugs, doormats, leisure sheets, buckets, hoses, containers, eye glasses, bags, casings, goggles, skis, rackets, tents, and musical instruments.

### EXAMPLES

### [Preparation of Additive Compositions 1 to 12]

Additive compositions 1 to 12 of the present invention were prepared in accordance with the respective blending ratios (parts by mass) shown in Tables 1 and 2 below. As the component (B), the following compound B-1 or compound B-2 was used:

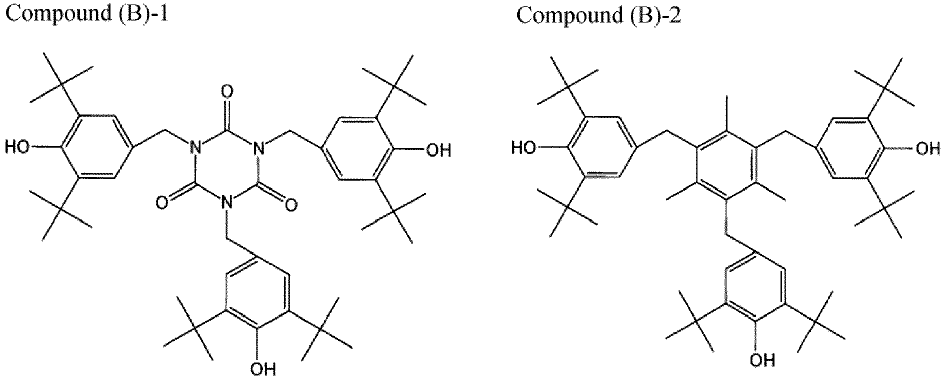

### [Preparation of Comparative Additive Compositions 1 to 12]

Comparative additive compositions 1 to 12 were prepared in accordance with the respective blending ratios (parts by mass) shown in Tables 3 and 4 below. In the comparative additive compositions 1 to 12, one of comparative phenolic antioxidants 1 to 3 was used in place of the component (B).

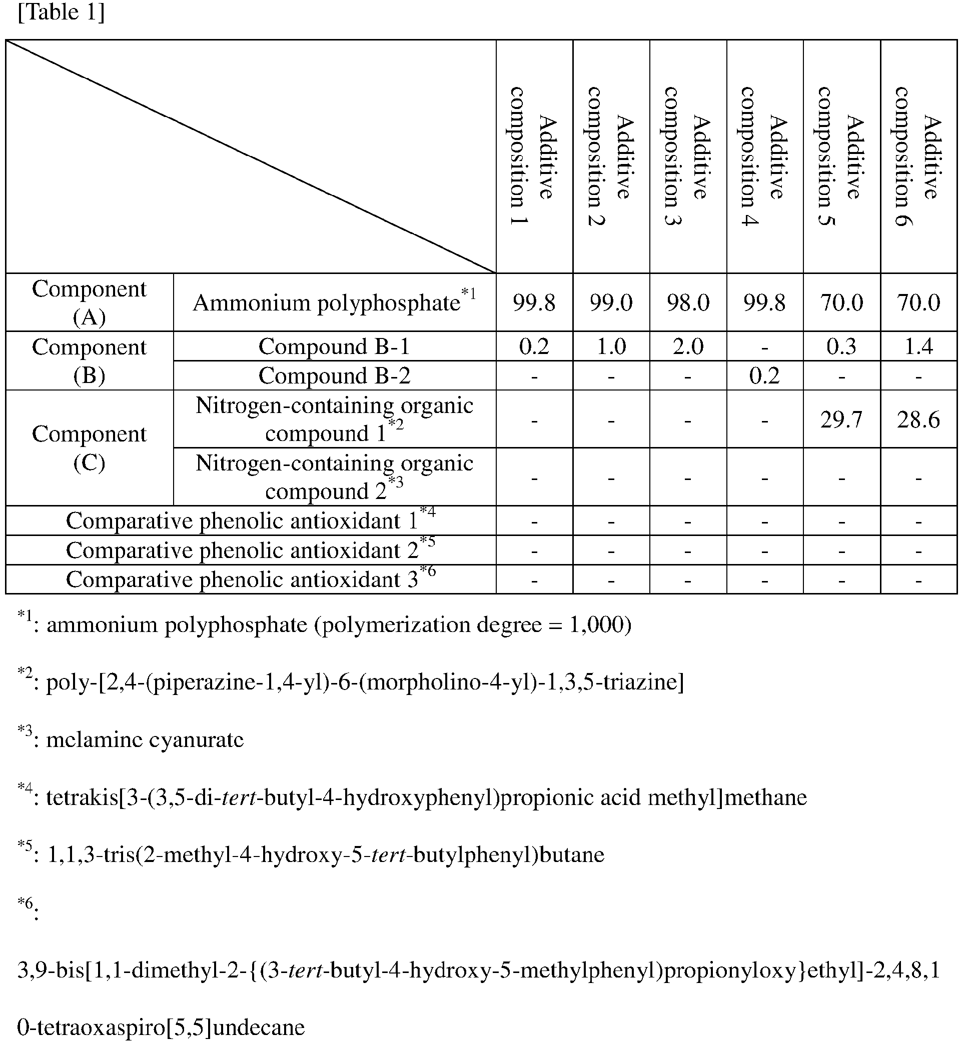

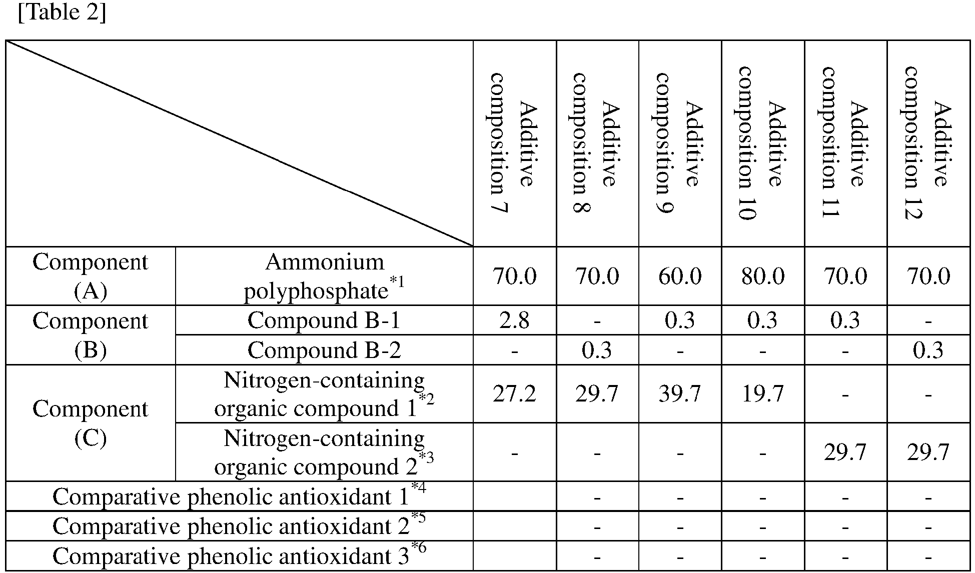

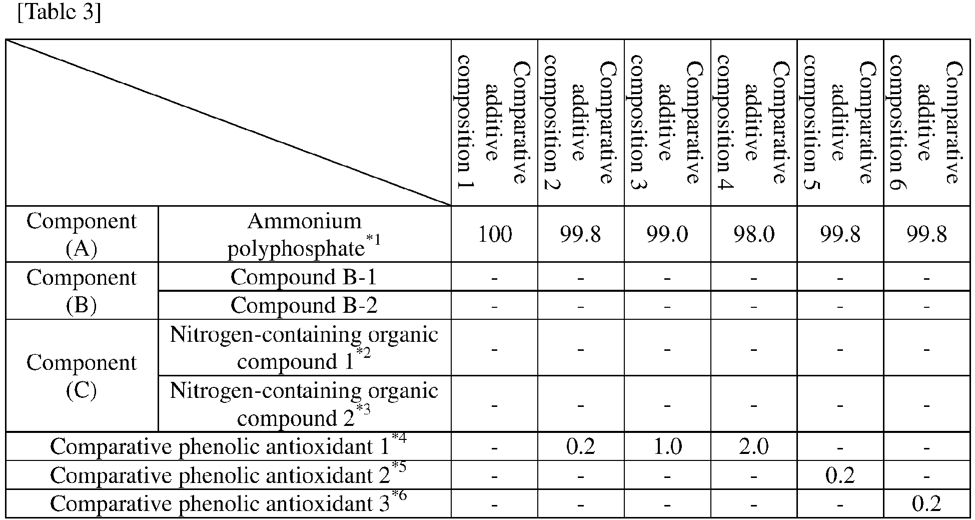

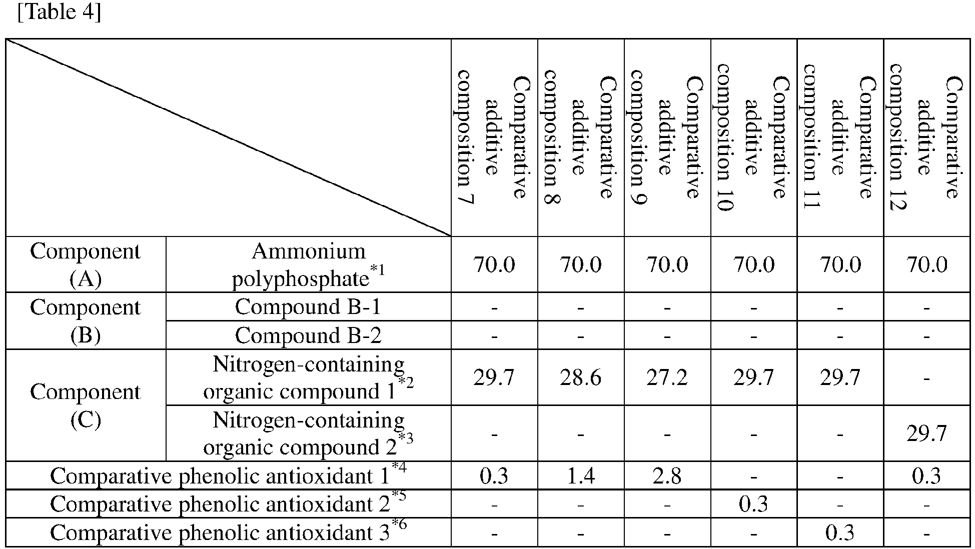

### [Examples 1 to 14 and Comparative Examples 1 to 14]

To a polypropylene resin composition obtained by blending a polypropylene (melt flow rate = 14 g/10 min) in the amount (parts by mass) shown in Table 5 or 6 with 0.1 parts by mass of calcium stearate (lubricant), 0.1 parts by mass of tris(2,4-di-*tert*-butylphenyl)phosphite (phosphorus-based antioxidant) and 0.3 parts by mass of glycerol monostearate (lubricant), the additive compositions 1 to 12 were each added in the respective amounts (parts by mass) shown in Tables 5 and 6 to obtain synthetic resin compositions of Examples 1 to 14. The thus obtained synthetic resin compositions were each extruded at 200 to 220°C to produce pellets, and these pellets were subsequently injection-molded at 200 to 220°C to obtain two kinds of test pieces each having a size of 60 × 30 × 2 mm or 127 × 12.7 × 1.6 mm, as well as test pieces for tensile strength measurement. The below-described tests were conducted using these test pieces. The results thereof are shown together in Tables 5 and 6.

Further, synthetic resin compositions of Comparative Examples 1 to 14 were obtained by adding the comparative additive compositions 1 to 12 in the respective amounts (parts by mass) shown in Tables 7 and 8. Test pieces were obtained in the same manner as described above, and the below-described tests were conducted. The results thereof are shown together in Tables 7 and 8.

### <Method for UL-94V Flame Retardancy Test>

Each test piece of 127 × 12.7 × 1.6 mm in size was held vertically, and a burner flame was brought into contact with the lower end of the test piece for 10 seconds. Subsequently, the flame was removed, and the time required for the flame ignited on the test piece to be extinguished was measured. Next, simultaneously with the flame extinction, a flame was again brought into contact with the test piece for 10 seconds, and the time required for the flame ignited on the test piece to be extinguished was measured in the same manner as in the first measurement. In addition, at the same time, it was evaluated whether or not a piece of cotton placed under the test piece was ignited by cinders falling from the test piece. Based on, for example, the first and the second combustion times and the presence or absence of ignition of the cotton piece, the condition of combustion was rated in accordance with the UL-94V standard. The combustion rating of V-0 represents the highest level of flame retardancy, and the flame retardancy decreases in the order of V-1 and V-2. When the condition did not correspond to any of the ratings V-0 to V-2, "NR" was assigned. In the present invention, an additive composition having a flame retardancy rating of V-2 or lower cannot withstand the actual use.

### <Cracking>

Each test piece of 60 × 30 × 2 mm in size was placed in a 150°C oven, and the presence or absence of cracking was visually checked at 24-hour intervals. The time until the occurrence of cracking was measured. The longer the time until cracks occur, the better the heat resistance, and the shorter the time until cracks occur, the poorer the heat resistance. In the present invention, an additive composition having a time until the occurrence of cracking of shorter than 800 hours cannot withstand the actual use.

### <Tensile Strength>

The tensile strength was tested in accordance with ISO527. That is, each test piece for tensile strength measurement was placed in a 150°C oven, and the tensile strength was measured at 48-hour intervals. The time until the tensile strength value was reduced to 70% or less with respect to the initial value measured before the test piece was placed in the oven was measured. The longer the time until the value was reduced to 70% or less, the better the heat resistance, and the shorter the time until the value was reduced to 70% or less, theworse the heat resistance.

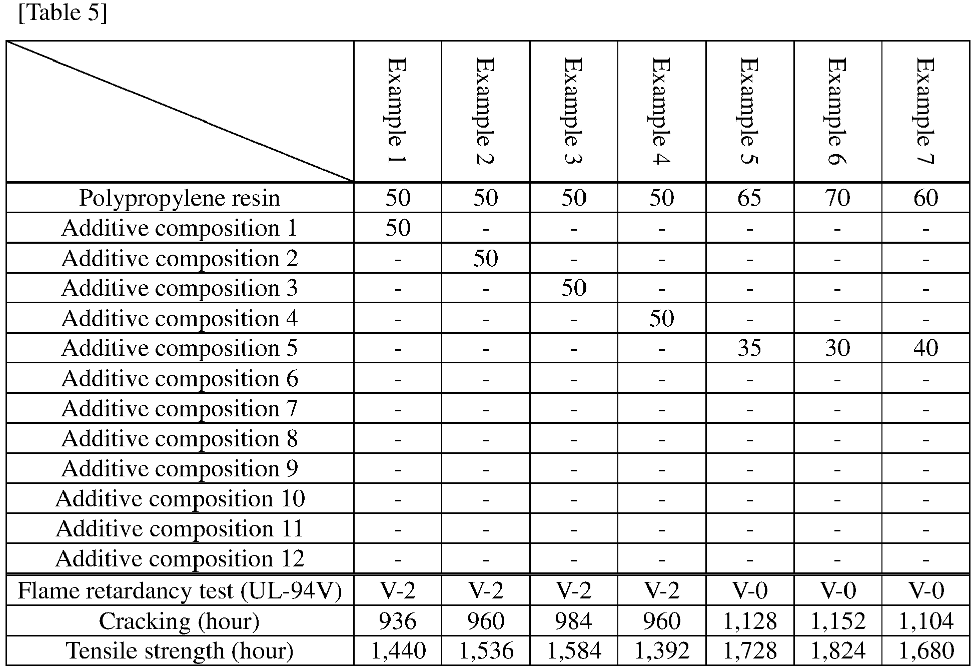

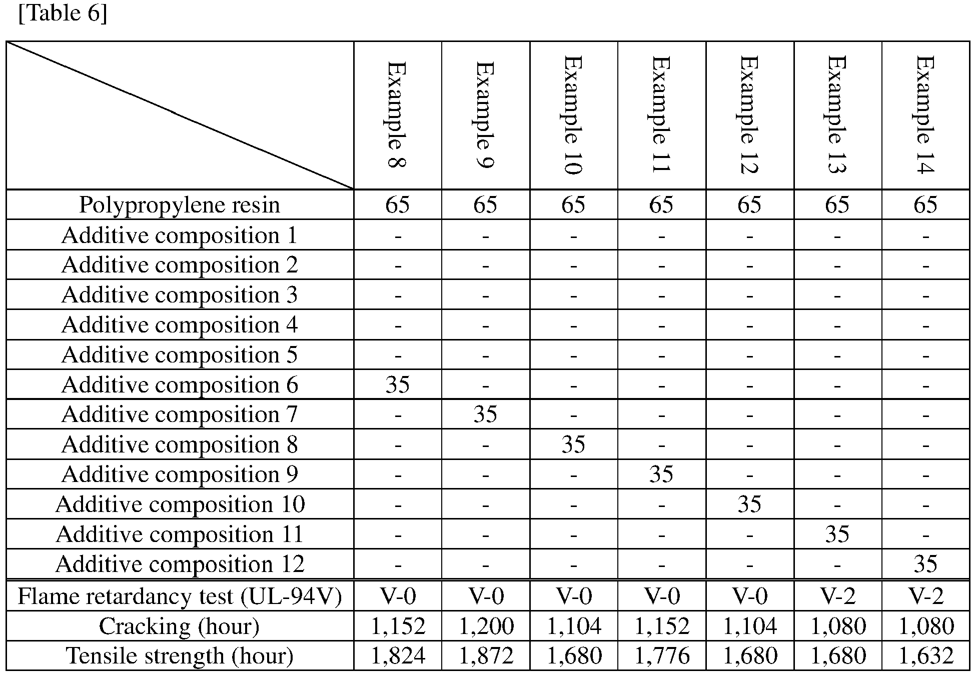

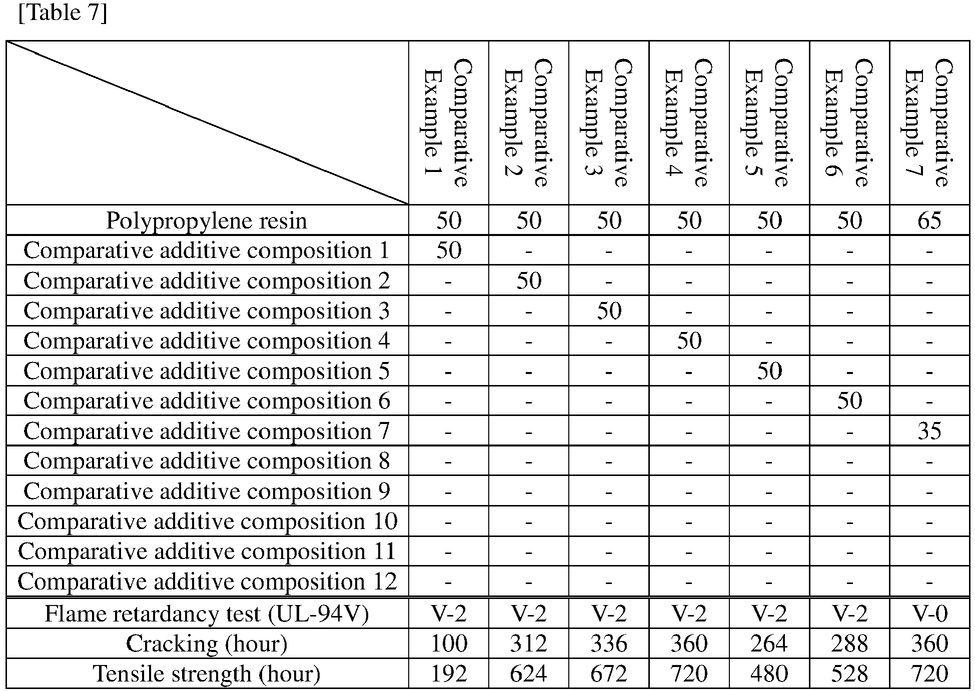

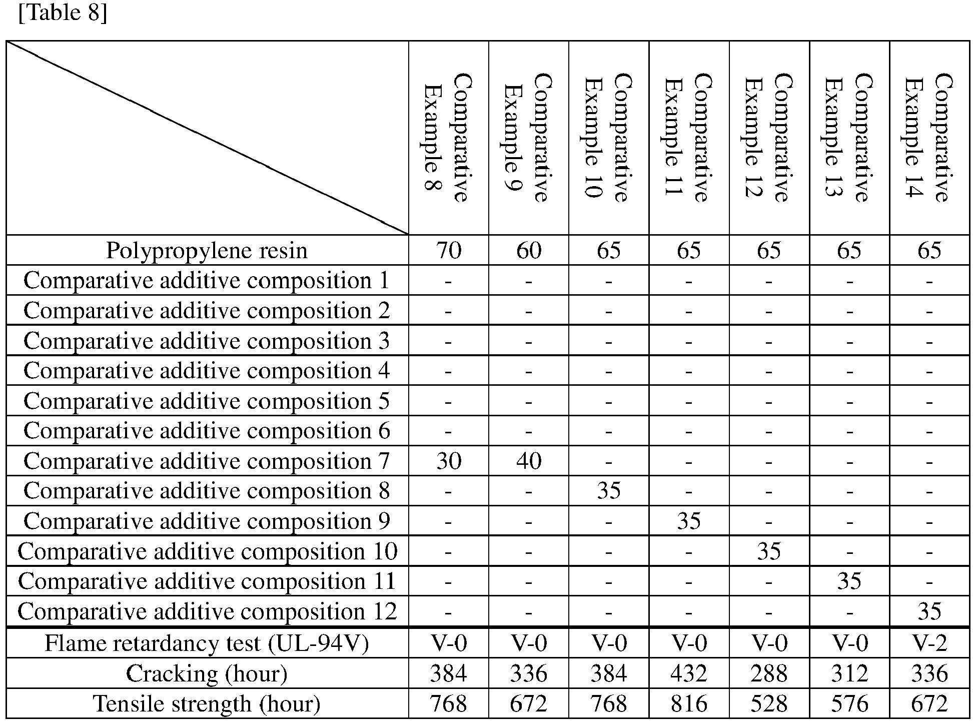

It is apparent from the results shown in Tables 1 to 8 that, according to the present invention, an additive composition which can impart excellent heat resistance and flame retardancy to a synthetic resin can be obtained. It is also apparent from the results shown in Tables 1 to 8 that, according to the present invention, a flame-retardant synthetic resin composition having excellent heat resistance and flame retardancy can be obtained. Moreover, it is apparent from the results shown in Tables 1 to 8 that, according to the present invention, a molded article having excellent heat resistance and flame retardancy can be obtained.

## Claims

1. An additive composition comprising:
as a component (A), at least one ammonium polyphosphate; and
as a component (B), at least one selected from the group consisting of compounds represented by Formula (1) below and compounds represented by Formula (2) below: 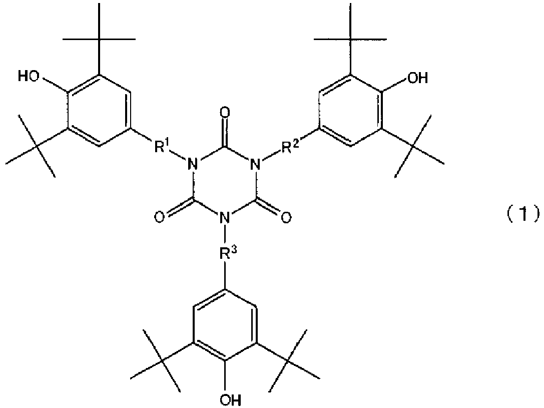 wherein, R¹, R² and R³ each independently represent a divalent hydrocarbon group having 1 to 3 carbon atoms; and 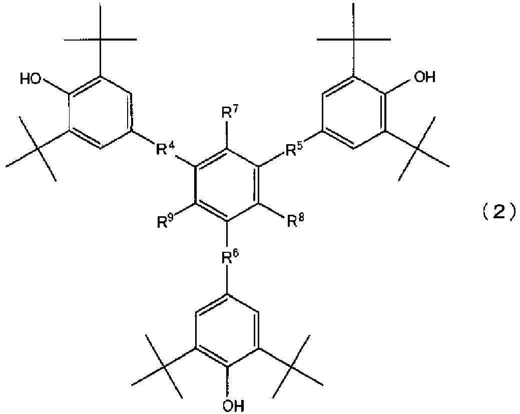 wherein, R⁴, R⁵ and R⁶ each independently represent a divalent hydrocarbon group having 1 to 3 carbon atoms; and R⁷, R⁸ and R⁹ each independently represent a hydrogen atom or a monovalent hydrocarbon group having 1 to 4 carbon atoms.

2. The additive composition according to claim 1, further comprising, as a component (C), at least one nitrogen-containing organic compound other than the compounds represented by Formula (1).

3. The additive composition according to claim 2, wherein the nitrogen-containing organic compound of the component (C) is at least one triazine derivative.

4. A flame-retardant synthetic resin composition, obtained by incorporating the additive composition according to any one of claims 1 to 3 into a synthetic resin.

5. The flame-retardant synthetic resin composition according to claim 4, wherein the synthetic resin is a polyolefin-based resin.

6. A molded article obtained from the flame-retardant synthetic resin composition according to claim 4 or 5.
